# EUROPÄISCHE PATENTSCHRIFT

(11) **EP 0 794 233 B1**
(45) Veröffentlichungstag und Bekanntmachung des Hinweises auf die Patenterteilung: **28.03.2001**
(21) Anmeldenummer: 97810092.3
(22) Anmeldetag: 24.02.1997
(51) Int. Cl.: C09B 43/16

(54) **Anionische Säurefarbstoffe, Verfahren zu deren Herstellung und deren Verwendung**
Anionic acid dyes, process for their manufacture and use thereof
Colorants acides anioniques, procédé pour leur fabrication et leur utilisation

(30) Priorität: 04.03.1996 CH 56096
(43) Veröffentlichungstag der Anmeldung: 10.09.1997
(73) Patentinhaber: Ciba Specialty Chemicals Holding Inc., 4057 Basel (CH)
(72) Erfinder: Adam, Jean-Marie, 68300 Rosenau (FR); Bacher, Jean-Pierre, 68220 Buschwiller (FR)

(56) Entgegenhaltungen:
- EP-A- 0 098 430
- EP-A- 0 190 586
- EP-A- 0 290 384
- EP-A- 0 692 523
- GB-A- 2 179 361

## Beschreibung

Die vorliegende Erfindung betrifft neue anionische Säurefarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind anionische Säurefarbstoffe der Formel 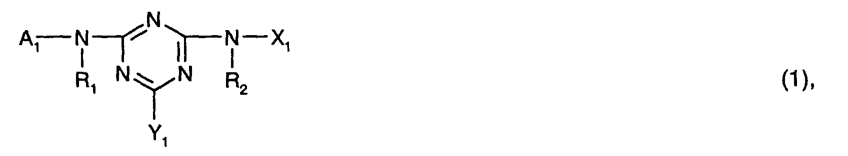 worin
R₁ Wasserstoff oder gegebenenfalls substituiertes C₁-C₄-Alkyl und
R₂ C₁-C₄-Alkyl sind,
X₁ C₁-C₈-Alkyl, gegebenenfalls substituiertes C₅-C₇-Cycloalkyl, gegebenenfalls durch C₁-C₄-Alkyl, C₁-C₄-Alkoxy, C₂-C₄-Alkanoylamino, Amino, Hydroxy, Ureido, Halogen, Carboxy oder Sulfo substituiertes Phenyl oder Naphthyl ist oder der Rest der Formel -N(R₂)-X₁ ein gegebenenfalls weitere Heteroatome enthaltender Ring ist,
Y₁ ein Rest der Formel 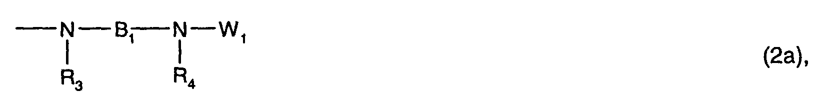 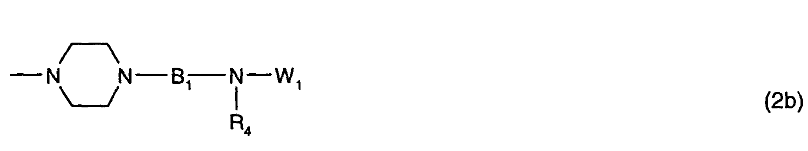 oder 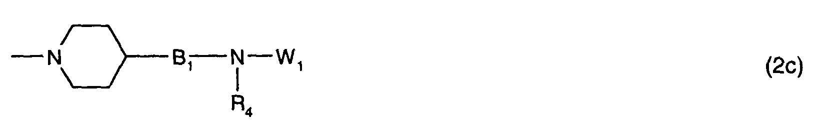 ist, worin
   B₁ ein farbloses organisches Brückenglied,
   R₃ Wasserstoff oder C₁-C₄-Alkyl und R₄ Wasserstoff oder gegebenenfalls substituiertes C₁-C₄-Alkyl sind,
   W₁ Wasserstoff oder ein Rest der Formel -CO-R ist, wobei R gegebenenfalls substituiertes C₁-C₈-Alkyl, C₅-C₇-Cycloalkyl, Phenyl oder Naphthyl bedeutet, und
   A₁ ein Rest der Formel 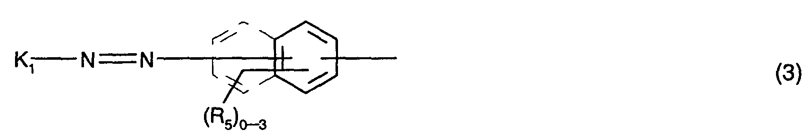 oder 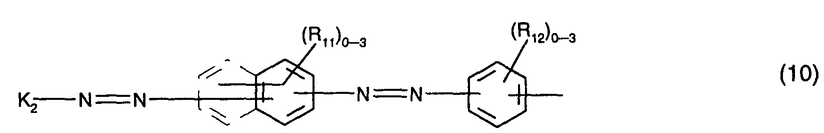 ist, worin
      K₁ und K₂ unabhängig voneinander ein Rest der Benzol- oder Naphthalinreihe oder ein heterocyclischer Rest sind,
      (R₅)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxy und Sulfo steht und
      (R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen, oder
      A₁ der Rest eines Metallkomplexazo-, Anthrachinon-, Formazan-, Phthalocyanin- oder Dioxazinfarbstoffes ist.

Aus der EP-A-0 692 523 sind Polyazofarbstoffe bekannt, welche als Azochromophore einen Trisazorest enthalten.

EP-A-0 098 430 beschreibt basische und kationische Triazinverbindungen, welche einen Azofarbstoffrest enthalten und mit einer oder mehreren Aminoethylpiperazingruppen substituiert sind.

EP-A-0 190 586 offenbart Disazofarbstoffe enthaltend zwei spezifisch substituierte Triazinreste.

EP-A-0 290 384 beschreibt anionische Disazofarbstoffe, welche einen substituierten Triazinrest und ein spezifisch substituiertes Phenylbrückenglied enthalten.

Als C₁-C₄-Alkyl kommen für R₁, R₂ und R₄ unabhängig voneinander z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo, Sulfato, Cyano oder Carboxy substituiert sein. Bevorzugt als Alkylreste sind die entsprechenden unsubstituierten Reste.

Als C₁-C₄-Alkyl kommen für R₃ und R₅ z.B. Methyl, Aethyl, Propyl, Isopropyl, Butyl, sek.-Butyl, tert.-Butyl oder Isobutyl in Betracht.

Als C₁-C₈-Alkyl kommen für X₁ und R unabhängig voneinander vorzugsweise C₁-C₄-Alkylreste, wie z.B. Methyl, Aethyl, Propyl, Isopropyl, Butyl, sek.-Butyl, tert.-Butyl oder Isobutyl, in Betracht. Die genannten Alkylreste können für R unsubstituiert oder z.B. durch Hydroxy, Sulfo, Sulfato, Cyano oder Carboxy substituiert sein. Bevorzugt sind hierbei für R die unsubstituierten Reste.

Als C₁-C₄-Alkoxy kommen für R₅ z.B. Methoxy, Äthoxy, Propoxy, Isopropoxy, Butoxy oder Isobutoxy, insbesondere Methoxy, in Betracht.

Als C₂-C₄-Alkanoylamino kommt für R₅ insbesondere Acetylamino oder Propionylamino, vorzugsweise Acetylamino, in Betracht.

Als Halogen kommt für R₅ z.B. Fluor, Chlor oder Brom, insbesondere Chlor, in Betracht.

Als gegebenenfalls weitere Heteroatome enthaltender Ring kommt für den Rest der Formel -N(R₂)-X₁ z.B. Morpholino in Betracht.

Als C₅-C₇-Cycloalkyl kommt für X₁ und R insbesondere der Cyclohexylrest in Betracht. Die genannten Cycloalkylreste können unsubstituiert oder z.B. durch C₁-C₄-Alkyl, insbesondere durch Methyl, substituiert sein.

Als Phenyl oder Naphthyl kommen für R neben den entsprechenden unsubstituierten Resten die beispielsweise durch C₁-C₄-Alkyl, C₁-C₄-Alkoxy, C₂-C₄-Alkanoylamino, Amino, Hydroxy, Ureido, Halogen, Carboxy oder Sulfo substituierten Reste in Betracht.

Als farbloses organisches Brückenglied kommt für B₁ z.B. gegebenenfalls substituiertes C₁-C₁₂-Alkylen, welches durch 1, 2 oder 3 Glieder aus der Gruppe -NH-, -N(CH₃)- oder -O- unterbrochen sein kann, oder gegebenenfalls substituiertes C₅-C₇-Cycloalkylen, Phenylen oder Naphthylen in Betracht. Als C₅-C₇-Cycloalkylen kommt hierbei insbesondere Cyclohexylen in Betracht, welches unsubstituiert oder z.B. durch C₁-C₄-Alkyl, insbesondere durch Methyl, substituiert sein kann. Als Substituenten der genannten Phenylen- und Naphthylenreste kommen hierbei z.B. C₁-C₄-Alkyl, C₁-C₄-Alkoxy, C₂-C₄-Alkanoylamino, Amino, Hydroxy, Ureido, Halogen, Carboxy oder Sulfo, insbesondere C₁-C₄-Alkyl, C₁-C₄-Alkoxy, Halogen oder Sulfo, in Betracht. Als Substituenten der genannten C₁-C₁₂-Alkylenreste kommen z.B. Hydroxy, Sulfo, Sulfato, Cyano oder Carboxy in Betracht. Vorzugsweise sind die C₁-C₁₂-Alkylenreste unsubstituiert.

R₁ ist bevorzugt Wasserstoff oder C₁-C₄-Alkyl. R₁ ist besonders bevorzugt Wasserstoff, Methyl oder Aethyl, insbesondere Wasserstoff. R₂ ist besonders bevorzugt Methyl oder Aethyl und vorzugsweise Aethyl.

(R₅)₀₋₃ steht bevorzugt für 0 bis 3 gleiche oder voneinander verschiedene Substituenten ausgewählt aus der Gruppe C₁-C₄-Alkyl, C₁-C₄-Alkoxy, Halogen und Sulfo. Besonders bevorzugt enthalten die Reste der Formel (3) nur einen Substituenten R₅, welcher Wasserstoff oder Sulfo, insbesondere Sulfo, ist.

X₁ ist bevorzugt C₁-C₈-Alkyl, gegebenenfalls durch C₁-C₄-Alkyl substituiertes C₅-C₇-Cycloalkyl oder gegebenenfalls durch C₁-C₄-Alkyl, C₁-C₄-Alkoxy, C₂-C₄-Alkanoylamino, Ureido, Halogen, Carboxy oder Sulfo substituiertes Phenyl oder Naphthyl. Besonders bevorzugt ist hierbei der Phenylrest, welcher wie oben angegeben substituiert sein kann. Ganz besonders bevorzugt ist X₁ gegebenenfalls durch C₁-C₄-Alkyl, C₁-C₄-Alkoxy, Halogen oder Sulfo substituiertes Phenyl, vorzugsweise unsubstituiertes Phenyl. R₂ ist hierbei besonders bevorzugt C₁-C₄-Alkyl, insbesondere Methyl oder Aethyl und vorzugsweise Aethyl.

B₁ ist bevorzugt ein C₁-C₁₂-Alkylenrest, insbesondere ein C₁-C₁₀-Alkylenrest, welcher durch 1, 2 oder 3 Glieder aus der Gruppe -NH-, -N(CH₃)- oder insbesondere -O- unterbrochen sein kann und unsubstituiert oder durch Hydroxy, Sulfo, Sulfato, Cyano oder Carboxy substituiert ist. Von besonderem Interesse sind hierbei die entsprechenden unsubstituierten Alkylenreste.

Besonders bevorzugt ist B₁ ein C₁-C₁₀-Alkylenrest, insbesondere ein C₁-C₆-Alkylenrest und vorzugsweise ein C₁-C₄-Alkylenrest. Besonders interessante Reste B₁ sind solche der Formeln -CH₂-, -CH₂CH₂- und -CH₂CH₂CH₂-.

R₃ ist bevorzugt Wasserstoff.
R₄ ist bevorzugt Wasserstoff oder gegebenenfalls durch Hydroxy, Sulfo, Sulfato, Cyano oder Carboxy substituiertes C₁-C₄-Alkyl, vorzugsweise Wasserstoff oder C₁-C₄-Alkyl und insbesondere Wasserstoff.

R ist bevorzugt gegebenenfalls durch C₁-C₄-Alkyl, C₁-C₄-Alkoxy, Halogen, Carboxy oder Sulfo substituiertes Phenyl oder insbesondere C₁-C₈-Alkyl. Besonders bevorzugt ist R C₁-C₄-Alkyl, insbesondere Methyl oder Aethyl und vorzugsweise Methyl.

W₁ ist bevorzugt Wasserstoff oder ein Rest der Formel -CO-R, wobei für R die oben an gegebenen Bedeutungen und Bevorzugungen gelten. Insbesondere ist R hierbei C₁-C₈-Alkyl oder gegebenenfalls durch C₁-C₄-Alkyl, C₁-C₄-Alkoxy, Halogen, Carboxy oder Sulfo substituiertes Phenyl, vorzugsweise C₁-C₈-Alkyl. Besonders bevorzugt ist W₁ Wasserstoff.

Bei dem Rest Y₁ handelt es sich bevorzugt um einen Rest der Formel (2a) oder (2b), insbesondere um einen Rest der Formel (2a).

Bevorzugt sind Farbstoffe der Formel (1), worin
R₁ und R₄ unabhängig voneinander Wasserstoff oder C₁-C₄-Alkyl sind,
R₂ C₁-C₄-Alkyl,
X₁ gegebenenfalls durch C₁-C₄-Alkyl, C₁-C₄-Alkoxy, C₂-C₄-Alkanoylamino, Ureido, Halogen, Carboxy oder Sulfo substituiertes Phenyl, vorzugsweise Phenyl, ist,
B₁ ein C₁-C₁₀-Alkylenrest ist, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist, und
W₁ Wasserstoff oder ein Rest der Formel -CO-R, insbesondere Wasserstoff, ist.

Bei dem Rest der Formel (3) handelt es sich bevorzugt um einen Rest der Formel 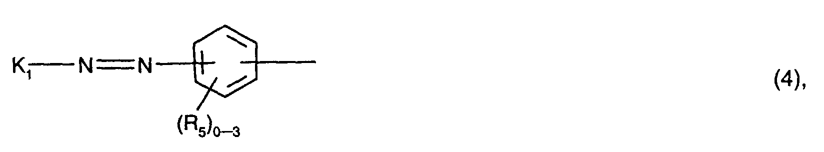 wobei für K₁ und (R₅)₀₋₃ die oben angegebenen Bedeutungen und Bevorzugungen gelten. Der Rest K₁ ist bevorzugt ein Benzol-, Naphthalin-, 6-Hydroxypyrid-(2)-on-, 1-Phenyl-5-aminopyrazol-, 1-Phenylpyrazol-(5)-on- oder Indolrest, insbesondere ein Benzol-, Naphthalin-, 1-Phenyl-5-aminopyrazol- oder 1-Phenylpyrazol-(5)-onrest und vorzugsweise ein Naphthalin-, 1-Phenyl-5-aminopyrazol- oder 1-Phenylpyrazol-(5)-onrest.

Als Beispiele für Substituenten des Restes K₁ seien die folgenden genannt:
C₁-C₈-Alkyl, insbesondere C₁-C₄-Alkyl, wie Methyl, Aethyl, Propyl, Isopropyl, Butyl, Isobutyl, sek.-Butyl oder tert.-Butyl; C₁-C₈-Alkoxy, insbesondere C₁-C₄-Alkoxy, wie Methoxy, Aethoxy, Propoxy, Isopropoxy, Butoxy, Isobutoxy, sek.-Butoxy oder tert.-Butoxy; C₂-C₆-Alkanoylamino, insbesondere C₂-C₄-Alkanoylamino, wie z.B. Propionylamino oder insbesondere Acetylamino; Halogen, wie z.B. Fluor oder insbesondere Chlor; Hydroxyl; Cyano; Carbamoyl; Carboxyl; Sulfo; Phenyl; Amino; N-Mono- oder N,N-Di-C₁-C₄-Alkylamino. Hierbei können die genannten Phenylreste unsubstituiert oder z.B. durch C₁-C₄-Alkyl, C₁-C₄-Alkoxy, C₂-C₄-Alkanoylamino, Ureido, Halogen, Carboxyl oder Sulfo substituiert sein.

Besonders bevorzugt ist K₁ ein Rest der Formel 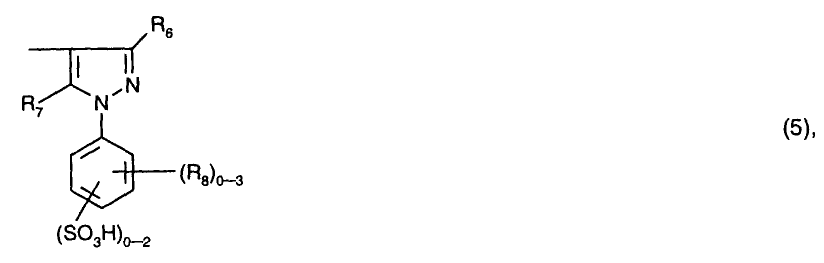 worin
R₆ Methyl oder Carboxyl,
R₇ Amino oder Hydroxyl ist und
(R₈)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxyl und Sulfo steht, oder
K₁ ist ein Rest der Formel 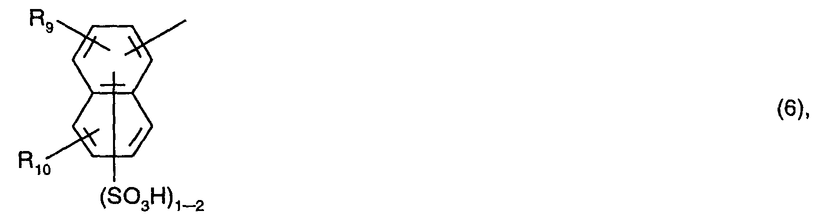 worin
   R₉ Wasserstoff, Amino oder N-Mono- oder N,N-Di-C₁-C₄-Alkylamino und
   R₁₀ Wasserstoff oder Hydroxyl ist.

R₆ ist bevorzugt Methyl.

(R₈)₀₋₃ steht bevorzugt für 0 bis 3 gleiche oder voneinander verschiedene Substituenten ausgewählt aus der Gruppe C₁-C₄-Alkyl, C₁-C₄-Alkoxy, Halogen und Sulfo.

R₉ ist bevorzugt Amino oder N-Mono- oder N,N-Di-C₁-C₄-Alkylamino, insbesondere Amino.

R₁₀ ist bevorzugt Wasserstoff.

Die Reste der Formel (6) enthalten vorzugsweise nur eine Sulfogruppe.

Als Reste K₁ der Formel (6) sind solche der Formel 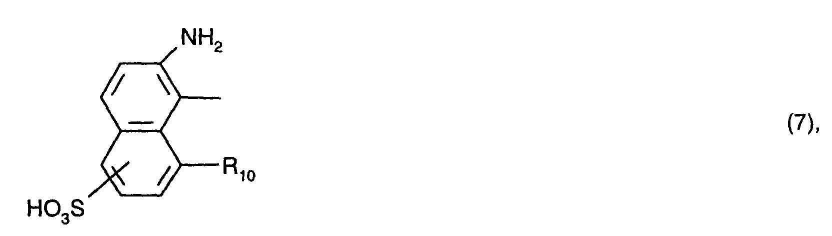 worin R₁₀ Wasserstoff oder Hydroxyl, insbesondere Wasserstoff, bedeutet, bevorzugt.

Für den Rest K₂ gelten hierbei die oben für K₁ angegebenen Bedeutungen und Bevorzugungen.
(R₁₁)₀₋₃ und (R₁₂)₀₋₃ stehen bevorzugt unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Sulfo, Amino oder N-Mono- oder N,N-Di-C₁-C₄-Alkylamino. Ganz besonders bevorzugt stehen (R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Sulfo und Amino.

Der Rest A₁ im Farbstoff der Formel (1) kann als Rest eines Metallkomplexazo-, Anthrachinon-, Formazan-, Phthalocyanin- oder Dioxazinfarbstoffes an seinem Grundgerüst die bei organischen Farbstoffen üblichen Substituenten gebunden enthalten.

Als Beispiele für Substituenten im Rest A₁ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, Isopropoxy oder Butoxy, wobei die Alkylreste z.B. durch Hydroxyl, Sulfo oder Sulfato weitersubstituiert sein können; gegebenenfalls durch C₁-C₄-Alkyl, C₁-C₄-Alkoxy, Halogen, Carboxy oder Sulfo substituiertes Phenyl; Acylaminogruppen mit 1 bis 8 Köhlenstoffatomen, insbesondere solche Alkanoylaminogruppen, wie z.B. Acetylamino oder Propionylamino; gegebenenfalls im Phenylring durch C₁-C₄-Alkyl, C₁-C₄-Alkoxy, Halogen oder Sulfo substituiertes Benzoylamino; gegebenenfalls im Phenylring durch C₁-C₄-Alkyl, C₁-C₄-Alkoxy, Halogen oder Sulfo substituiertes Phenylamino; N,N-Di-β-hydroxyäthylamino; N,N-Di-β-sulfatoäthylamino; Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; Sulfamoyl; N-Mono- oder N,N-Dialkylsulfamoyl mit jeweils 1 bis 4 Kohlenstoffatomen; gegebenenfalls durch C₁-C₄-Alkyl, C₁-C₄-Alkoxy, Halogen, Carboxy oder Sulfo substituiertes N-Phenylsulfamoyl; Ureido; Hydroxy; Carboxy; Sulfomethyl oder Sulfo.

Für A₁ als Rest eines Anthrachinonfarbstoffs kommen insbesondere solche der Formel 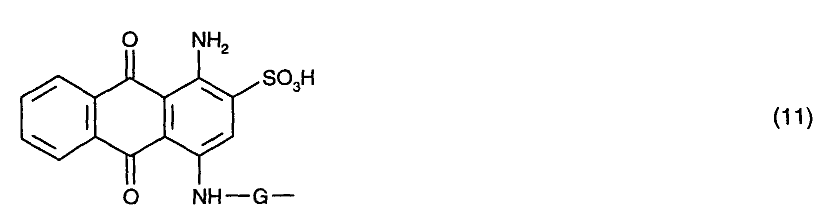 in Betracht, worin G einen unsubstituierten oder durch C₁-C₄-Alkyl, C₁-C₄-Alkoxy, Halogen, Carboxy oder Sulfo substituierten Phenylenrest oder einen Cyclohexylen-, Phenylenmethylen- oder C₂-C₆-Alkylenrest bedeutet.

Bevorzugt ist G ein unsubstituierter oder durch C₁-C₄-Alkyl, C₁-C₄-Alkoxy, Halogen, Carboxy oder Sulfo, insbesondere durch C₁-C₄-Alkyl oder Sulfo, substituierter Phenylenrest.

Von besonderer Bedeutung für A₁ als Rest eines Anthrachinonfarbstoffs sind solche der Formel 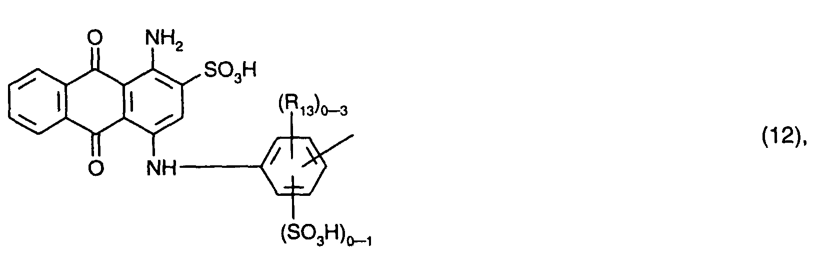 worin (R₁₃)₀₋₃ für 0 bis 3 gleiche oder voneinander verschiedene Substituenten ausgewählt aus der Gruppe C₁-C₄-Alkyl, C₁-C₄-Alkoxy, Halogen, Carboxy und Sulfo steht. Besonders bevorzugt ist hierbei R₁₃ C₁-C₄-Alkyl, insbesondere Methyl. Vorzugsweise enthalten die Reste der Formel (12) zwei Sulfogruppen.

Bei dem Rest A₁ handelt es sich vorzugsweise um einen Rest der Formel (3), um den Rest der Formel (10), oder den Rest eines Anthrachinonfarbstoffes, wobei für diese genannten Reste die oben angegebenen Bedeutungen und Bevorzugungen gelten.

Bevorzugt sind Farbstoffe der Formel (1), worin A₁ ein Rest der Formel (3) oder (11) ist. K₁ und K₂ sind hierbei vorzugsweise Reste der Formel (5) oder (6), insbesondere Reste der Formel (5) oder (7). Für die Reste R₁, R₂, X₁ und Y₁ gelten hierbei die oben angegebenen Bedeutungen und Bevorzugungen.

Ganz besonders bevorzugt sind Farbstoffe der Formel (1), worin A₁ ein Rest der Formel (4), (10) oder (12) ist. K₁ und K₂ sind hierbei vorzugsweise Reste der Formel (5) oder (6), insbesondere Reste der Formel (5) oder (7). Für die Reste R₁, R₂, X₁ und Y₁ gelten hierbei die oben angegebenen Bedeutungen und Bevorzugungen.

Gegenstand der vorliegenden Erfindung ist ferner ein Verfahren zur Herstellung der Farbstoffe der Formel (1), welches dadurch gekennzeichnet ist, dass man Cyanurhalogenid, insbesondere Cyanurfluorid oder vorzugsweise Cyanurchlorid, mit einer Verbindung der Formel

A₁-NHR₁ (13),

einer Verbindung der Formel

X₁-NHR₂ (14)

und einer Verbindung der Formel

Y₁-H (15)

umsetzt und gegebenenfalls eine Umwandlungsreaktion anschliesst, wobei A₁, X₁, Y₁, R₁ und R₂ die unter Formel (1) angegebenen Bedeutungen haben.

Vorzugsweise setzt man Cyanurhalogenid zunächst mit in etwa stöchiometrischen Mengen einer Verbindung der Formel (13) bei einer Temperatur von -5 bis 20°C, vorzugsweise 0 bis 5°C um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 2 bis 7, insbesondere 2 bis 4, gehalten wird. Zu dem erhaltenen Reaktionsgemisch werden zweckmässigerweise in etwa stöchiometrische Mengen einer Verbindung der Formel (14) gegeben und diese bei leicht erhöhter Temperatur, vorzugsweise bei 10 bis 60°C, insbesondere 15 bis 30°C, und einem neutralen bis leicht sauren pH-Wert, der vorzugsweise 6 bis 7 beträgt, mit dem Triazinderivat zur Reaktion gebracht.

Eine weitere Möglichkeit besteht darin, Cyanurhalogenid zunächst mit einem Vorprodukt der Verbindung der Formel (13), wie z.B. einer Diazokomponente im Falle von Azofarbstoffresten, umzusetzen und dann, beispielsweise durch Diazotierung und Kupplung, zum entsprechenden Farbstoffrest A₁ umzusetzen. Diese Umsetzung zum Farbstoffrest kann z.B. vorzugsweise direkt im Anschluss an die Umsetzung von Cyanurhalogenid mit dem Vorprodukt erfolgen, oder aber auch im weiteren Verlauf der Synthese des Farbstoffs der Formel (1).

Die gemäss den oben beschriebenen Verfahren erhältlichen Triazinylverbindungen enthalten noch ein Halogenatom, welches durch Reaktion mit einer Verbindung der Formel (15) bei erhöhter Temperatur, vorzugsweise 20 bis 70°C, und einem neutralen bis leicht alkalischen pH-Wert, der je nach eingesetzter Verbindung der Formel (15) z.B. 7 bis 9 beträgt, in eine Gruppe Y₁ umgewandelt werden kann. Vorteilhafterweise setzt man einen Ueberschuss der Verbindung der Formel (15) ein.

Als Umwandlungsreaktion kommt insbesondere eine Acylierungsreaktion in Betracht, wobei ein Rest W₁ der Formel -CO-R eingeführt wird.

Hierbei geht man wie oben beschrieben vor und verwendet eine Verbindung der Formel (15), worin W₁ Wasserstoff bedeutet. Das erhaltene Reaktionsprodukt wird anschliessend mit einer Verbindung der Formel

Hal-CO-R (16)

umgesetzt, worin Hal Halogen, insbesondere Brom oder Chlor, bedeutet und R die oben angegebenen Bedeutungen hat.

Für die Einführung eines Restes der Formel -CO-R, worin R Methyl ist, verwendet man vorzugsweise Essigsäureanhydrid.

Die Umsetzung mit Verbindungen der oben genannten Formel (16) kann generell in dipolaren aprotischen Lösungsmitteln, wie z.B. Dimethylformamid, Dimethylsulfoxid oder N-Methylpyrrolidon, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 30 bis 80°C, erfolgen.

Die Umsetzung mit Essigsäureanhydrid erfolgt in der Regel in wässrigem Medium, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 20 bis 60°C, insbesondere 30 bis 50°C, und einem pH-Wert von z.B. 4 bis 7, insbesondere 5 bis 6.

Die in den obigen Verfahren eingesetzten Verbindungen sind bekannt oder können in Analogie zu bekannten Verbindungen erhalten werden.

Die Farbstoffe der Formel (1) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Bedeutung Sulfo umfasst generell die freie Säureform (-SO₃H) als auch die Salzform.

Bei den Farbstoffen der Formel (1) handelt es sich um anionische Säurefarbstoffe. In den Farbstoffen der Formel (1) ist die Zahl der anionischen Gruppen, insbesondere die Zahl der Sulfogruppen, grösser oder gleich der Zahl der kationischen Gruppen. Vorzugsweise ist die Zahl der anionischen Gruppen grösser als die Zahl der kationischen Gruppen. Unter kationischen Gruppen sind solche zu verstehen, welche unter den üblichen Färbebedingungen eine kationische Ladung tragen. Als Beispiele seien aliphatisch gebundene Aminoreste genannt. Die im Triazinring vorhandenen sowie die an den Triazinrest gebundenen Stickstoffatome tragen keine kationische Ladung. Die Gesamtzahl der Sulfo- und Sulfatogruppen der Farbstoffe der Formel (1) ist vorzugsweise grösser als eins. Bevorzugt ist die Gesamtzahl der Sulfo- und Sulfatogruppen der Farbstoffe der Formel (1) zwei bis vier, insbesondere zwei oder drei und vorzugsweise zwei.

Die erfindungsgemässen Farbstoffe der Formel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Farbstoffe der Formel (1) können in allgemein üblicher, gegebenenfalls zuvor aufbereiteter Form zum Färben oder Bedrucken verwendet werden. Man erhält egale Färbungen mit guten Allgemeinechtheiten, insbesondere guter Reib-, Nass-, Nassreib- und Lichtechtheit. Ferner sind die erfindungsgemässen Farbstoffe gut wasserlöslich und gut mit anderen Farbstoffen kombinierbar. Die erfindungsgemässen Farbstoffe, worin W₁ Wasserstoff ist, eignen sich ferner sehr gut zum Färben in Gegenwart von farblosen, sulfo- oder sulfatogruppenhaltigen, mindestens zwei faserreaktive Gruppen enthaltenden Fixiermitteln. Hierbei werden Färbungen mit verbesserten Nassechtheiten erhalten, wobei die Färbungen ebenfalls eine sehr gute Egalität aufweisen. Das oben genannte Textilmaterial kann in den verschiedensten Verarbeitungsformen vorliegen, wie z.B. als Faser, Garn, Gewebe oder Gewirke.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

19,1 Teile 1,3-Phenylendiamin-4-sulfonsäure (98,6%) werden in 100 Teilen Wasser und 52 Teilen einer wässrigen, 2-normalen Natriumhydroxidlösung bei einem pH-Wert von 7 gelöst und innerhalb von 50 Minuten, bei einer Temperatur von 5°C, in ein Gemisch bestehend aus 18,5 Teilen Cyanurchlorid, 100 Teilen Eis und 50 Teilen Wasser getropft. Während des Zutropfens wird der pH bei einem Wert von 3 bis 3,5 gehalten. Anschliessend wird mit 50 Teilen einer wässrigen, 2-normalen Natriumhydroxidlösung der pH-Wert innerhalb von 70 Minuten auf 7 erhöht. Nach einer Stunde werden 25 Teile Salzsäure (37%) und 200 Teile Wasser zugegeben und, bei einer Temperatur von 5 bis 15°C, 25 Teile einer wässrigen, 4-molaren Natriumnitritlösung innerhalb von 25 Minuten zudosiert. Nach zwei Stunden wird das überschüssige Natriumnitrit mit Sulfaminsäure zerstört. Wärenddessen werden 22,5 Teile 2-Naphthylamin-5-sulfonsäure in 100 Teilen Wasser und 52 Teilen einer wässrigen, 2-normalen Natriumhydroxidlösung bei einem pH-Wert von 7 gelöst und innerhalb von 30 Minuten in das Reaktionsgemisch getropft. Darauf wird der pH mittels 112 Teilen einer wässrigen, 2-normalen Natriumhydroxidlösung innerhalb von 80 Minuten auf einen Wert von 7 gestellt. Anschliessend wird eine Lösung von 12,2 Teilen N-Ethylanilin in 100 Teilen 1-molarer Salzsäure innerhalb von 15 Minuten zugetropft, gefolgt von der Zugabe von 101 Teilen einer wässrigen, 2-normalen Natriumhydroxidlösung innerhalb von 50 Minuten. Die dunkelrote Reaktionslösung wird mit 500 Teilen einer wässrigen Natriumchloridlösung versetzt, das ausgefallene Produkt abfiltriert, mit 10%-iger wässriger Natriumchloridlösung gewaschen und im Vakuum bei einer Temperatur von 70°C getrocknet. Man erhält 52,5 Teile einer Zwischenverbindung der Formel

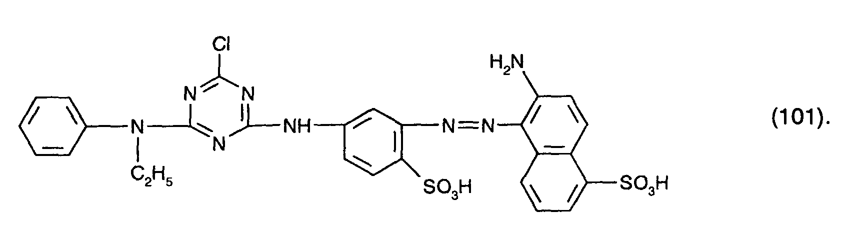

10 Teile des Zwischenprodukts der Formel (101) werden in 200 Teilen Wasser gelöst und innerhalb von 4 Stunden, bei einer Temperatur von 40°C, in eine Lösung von 14 Teilen 3-Methylaminopropylamin in 14 Teilen Wasser getropft. Man lässt eine Stunde bei einer Temperatur von 40°C nachrühren und gibt anschliessend 25 Teile Salzsäure hinzu. Das ausgefallene Produkt wird abfiltriert und mit Wasser gewaschen. Das feuchte Nutschgut wird in 300 Teile Wasser bei einer Temperatur von 70°C gegeben und mit 10 Teilen einer wässrigen, 1-normalen Natriumhydroxidlösung neutralisiert. Das Produkt wird mit 30 Teilen Natriumchlorid ausgesalzen, bei einer Temperatur von 40°C abfiltriert und im Vakuum bei einer Temperatur von 50°C getrocknet. Man erhält 8,8 Teile eines Farbstoffs, welcher in Form der freien Säure der Verbindung der Formel 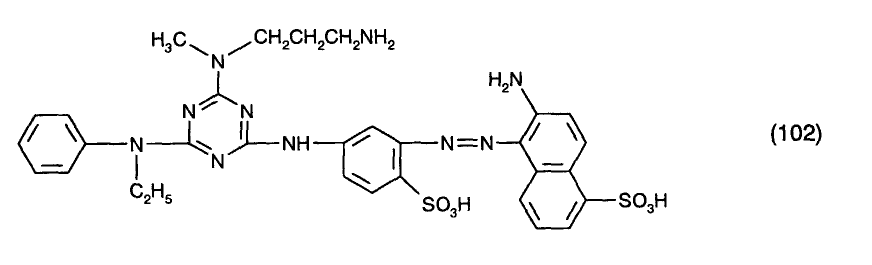 entspricht. Der erhaltene Farbstoff der Formel (102) färbt Wolle und synthetisches Polyamidfasermaterial in orangen Farbtönen.

### Beispiele 2 bis 25:

In analoger Weise zu den Angaben in Beispiel 1 können die in der folgenden Tabelle 1 in Form der freien Säuren angegebenen Farbstoffe erhalten werden, welche Wolle und synthetisches Polyamidfasermaterial in den in Spalte 3 angegebenen Farbtönen färben.

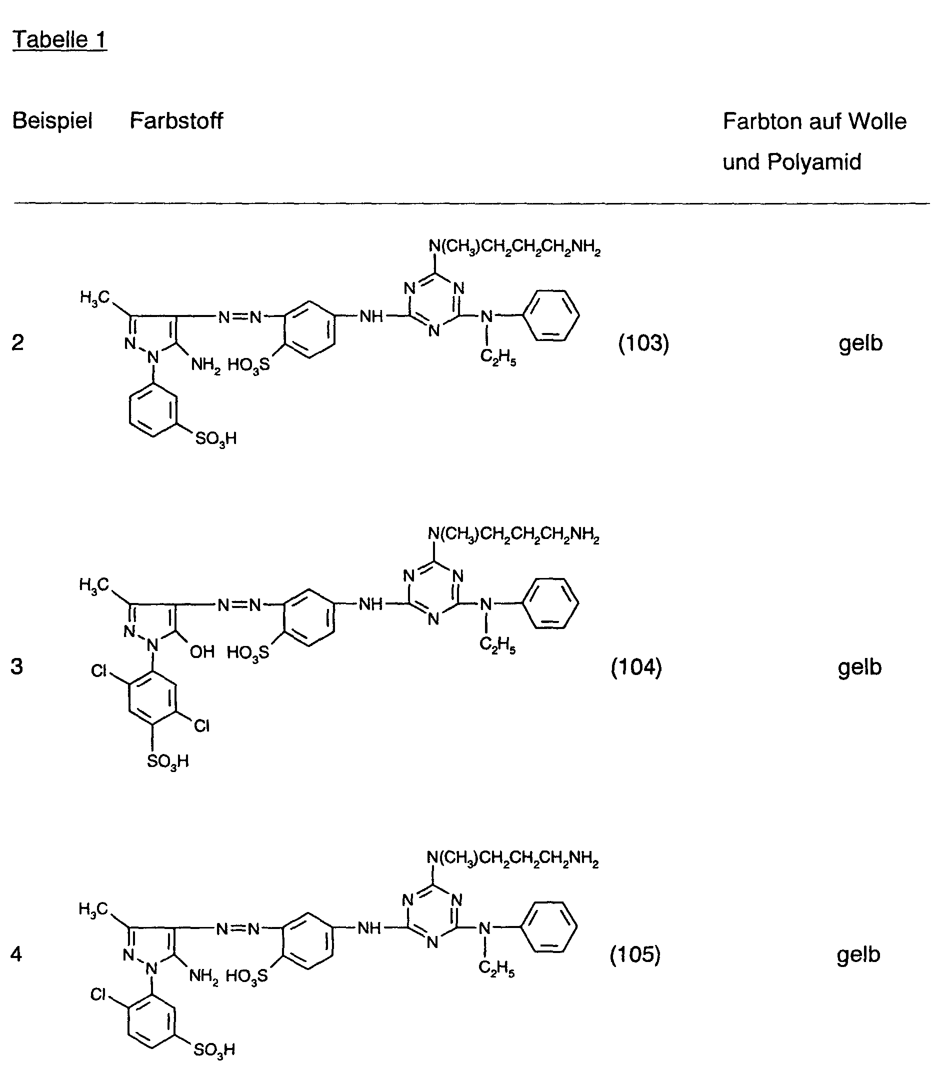

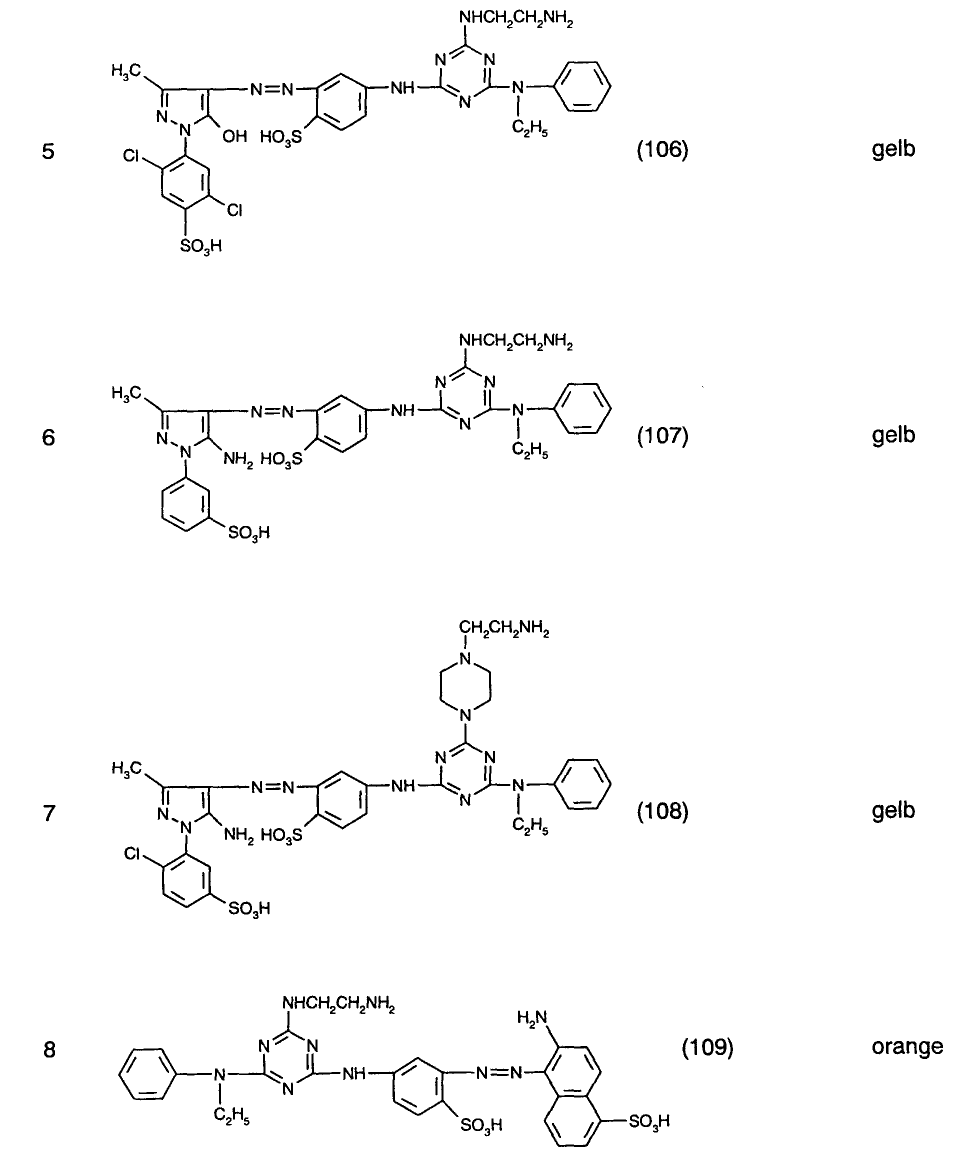

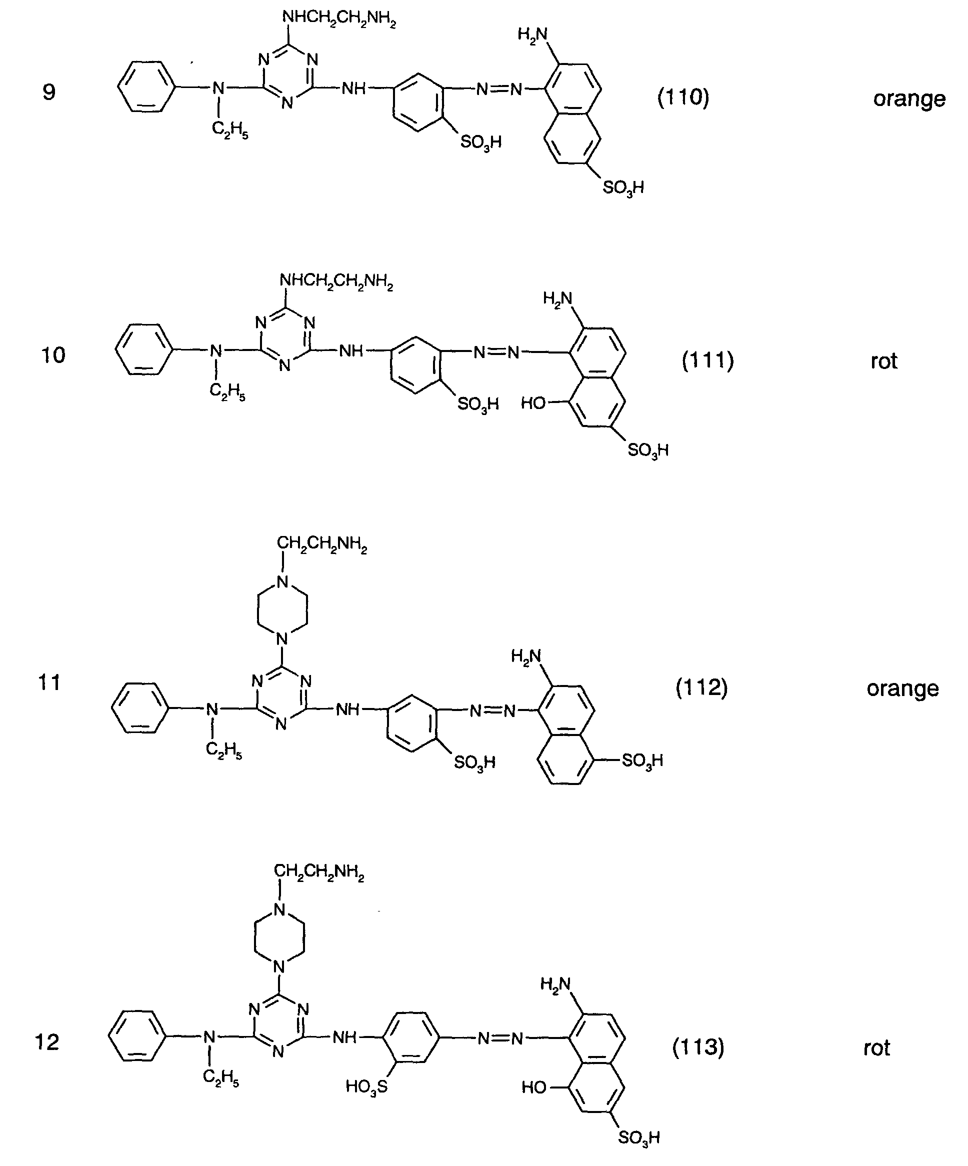

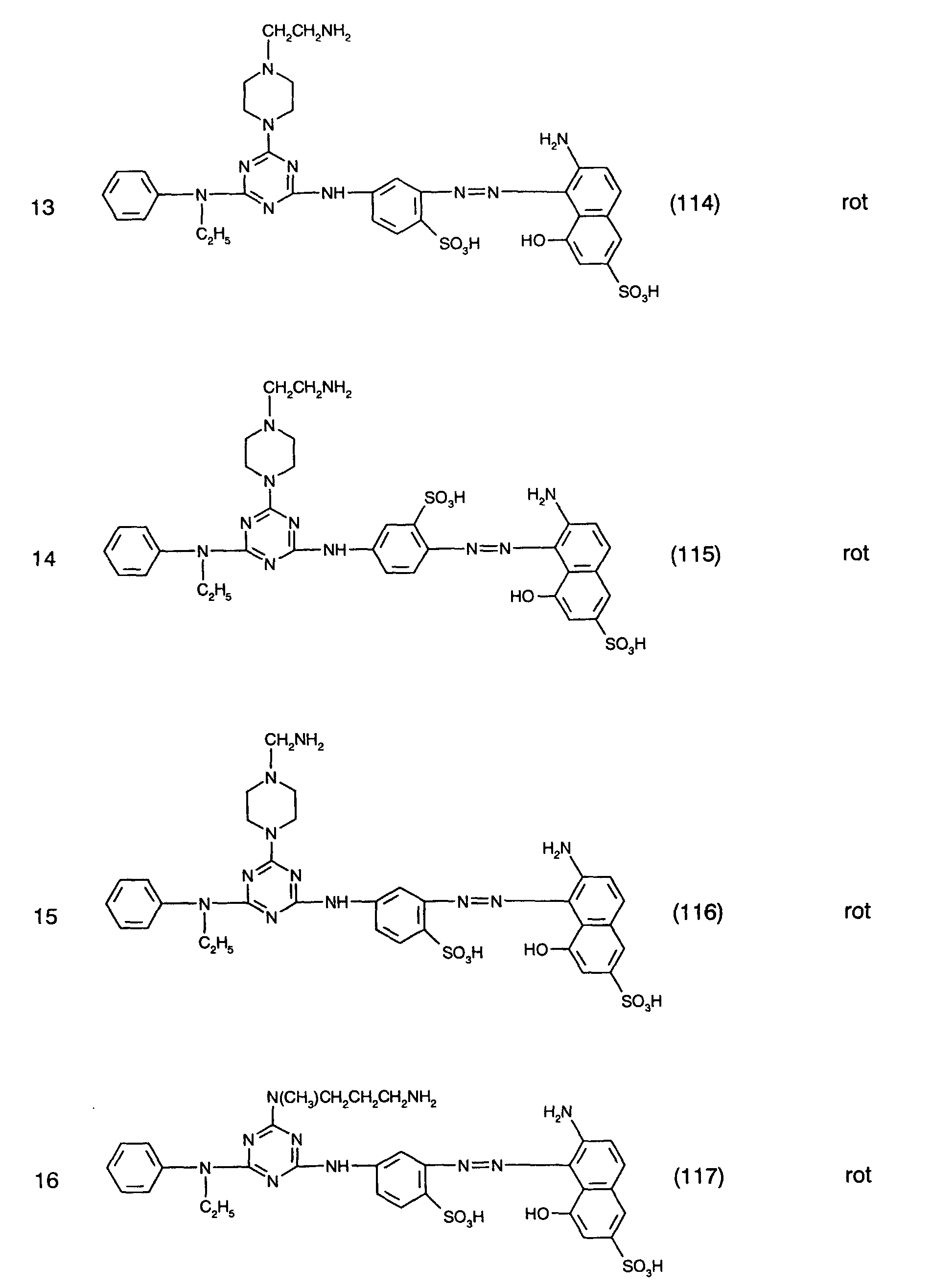

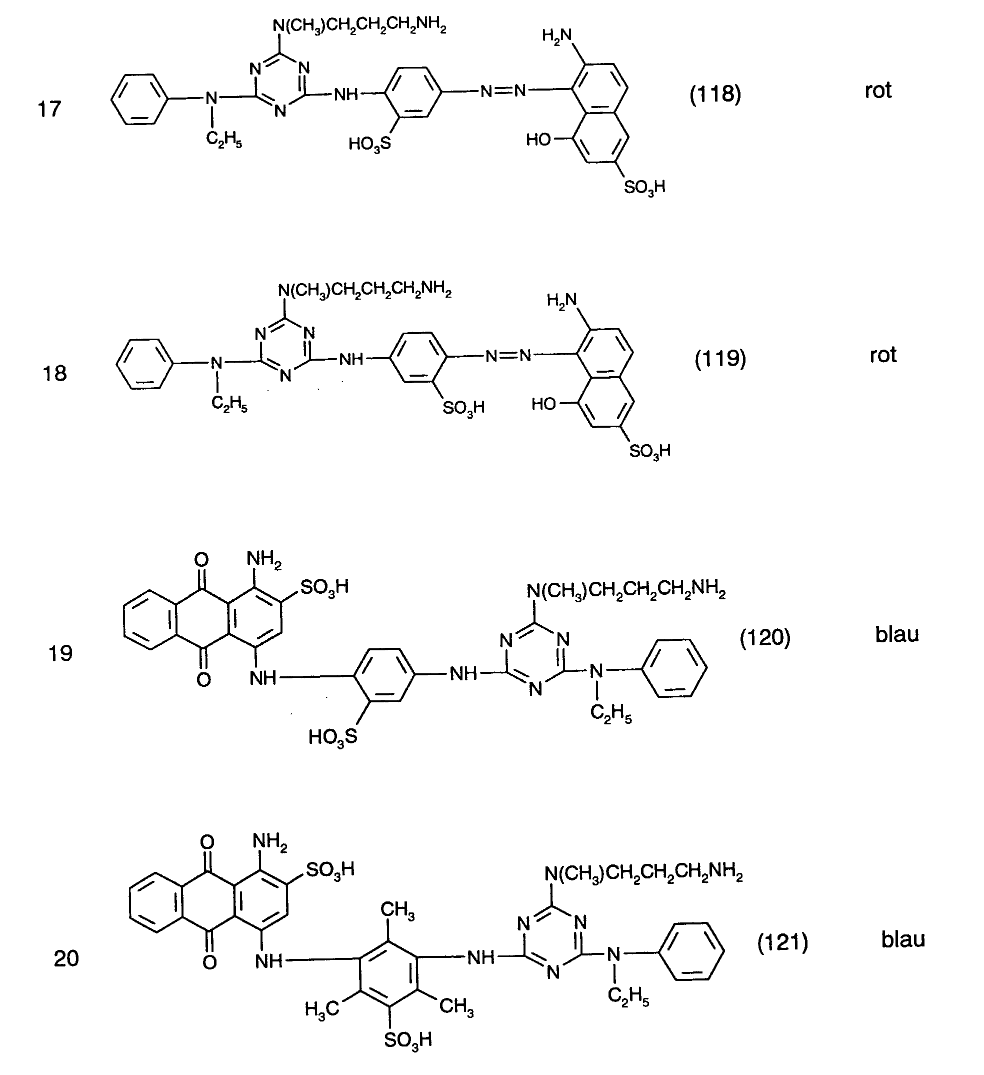

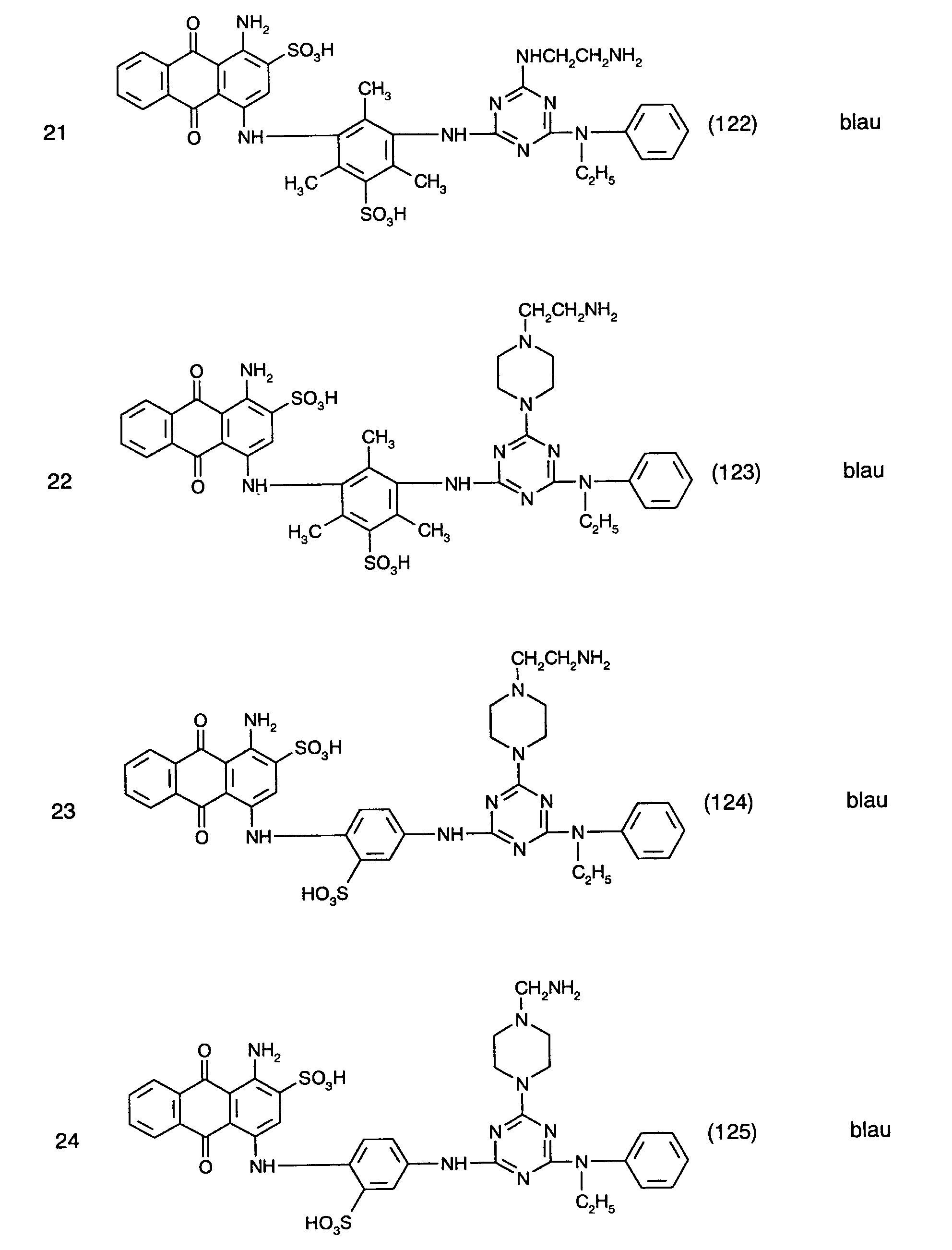

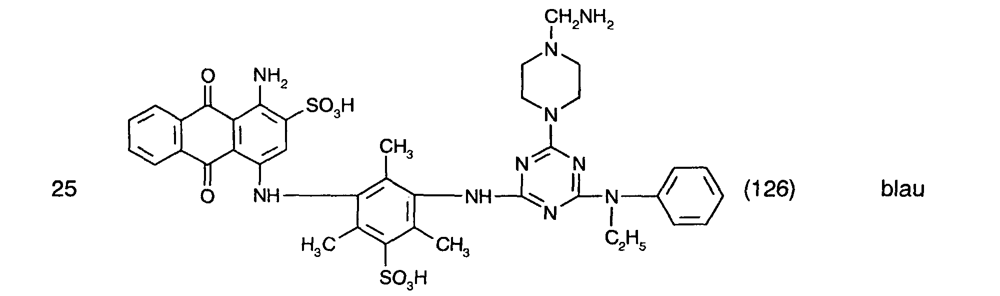

### Beispiel 26:

6,5 Teile des Farbstoffs der Formel 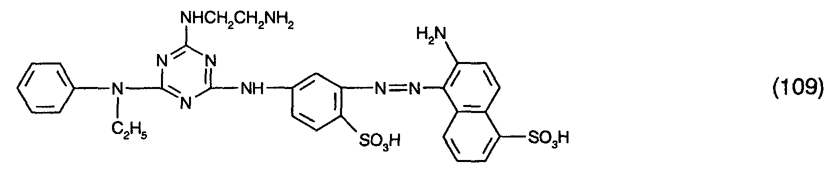 werden bei einer Temperatur von 35 bis 40°C und einem pH-Wert von 6 in 100 Teilen Wasser und 10 Teilen Dioxan gelöst, wobei die Einstellung des pH-Wertes mittels Salzsäure (37 %-ig) erfolgt. Man tropft innerhalb von 30 Minuten 6 Teile Essigsäureanhydrid hinzu, wobei der pH mittels 1-molarer, wässriger Natriumcarbonatlösung bei einem Wert zwischen 5 und 6 gehalten wird. Die Reaktionslösung wird eingedampft und der Rückstand im Vakuum bei einer Temperatur von 70°C getrocknet. Man erhält einen Farbstoff, welcher in Form der freien Säure der Verbindung der Formel 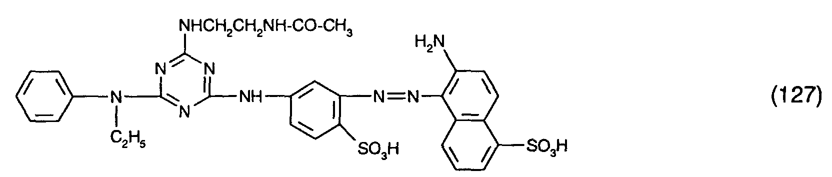 entspricht. Der Farbstoff der Formel (127) färbt Wolle und synthetisches Polyamidfasermaterial in orangen Farbtönen.

### Beispiele 27 bis 50:

In analoger Weise zu den Angaben in Beispiel 26 können die in der folgenden Tabelle 2 in Form der freien Säuren angegebenen Farbstoffe erhalten werden, welche Wolle und synthetisches Polyamidfasermaterial in den in Spalte 3 angegebenen Farbtönen färben.

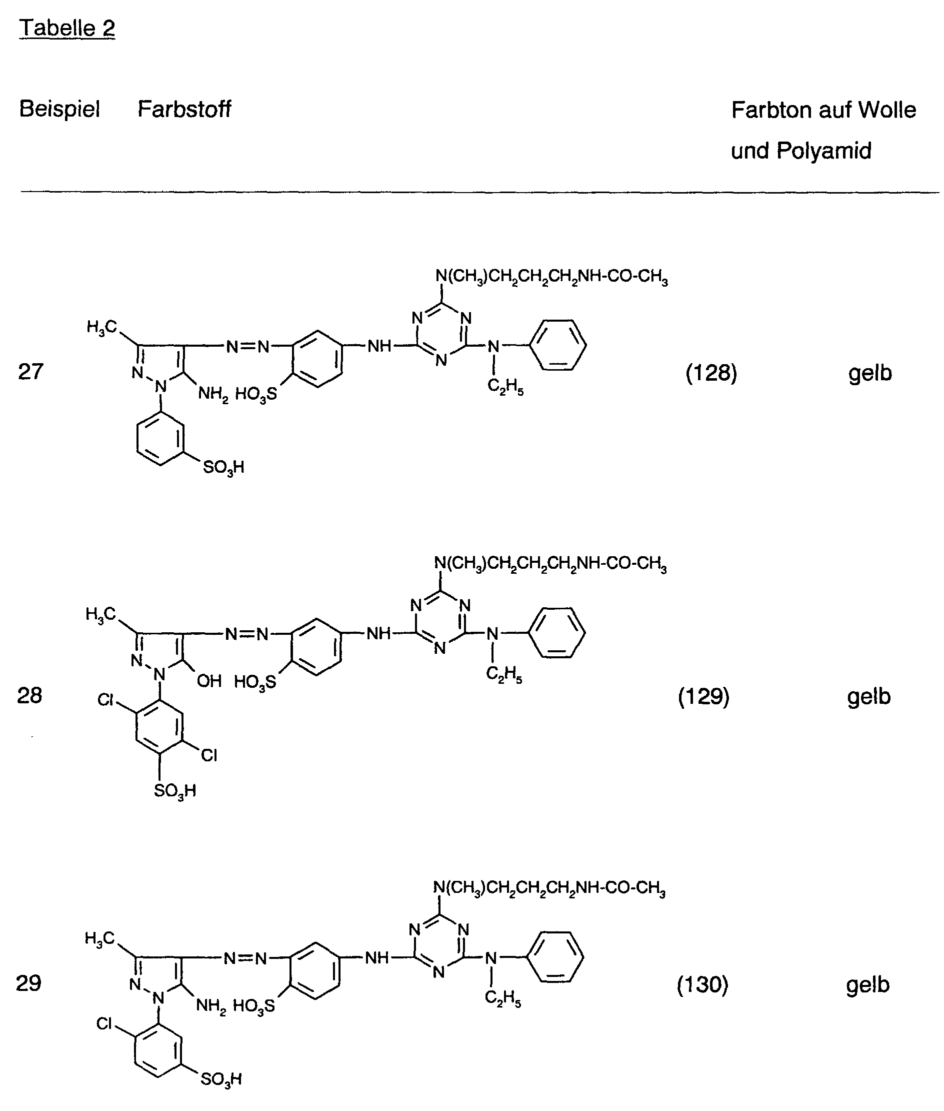

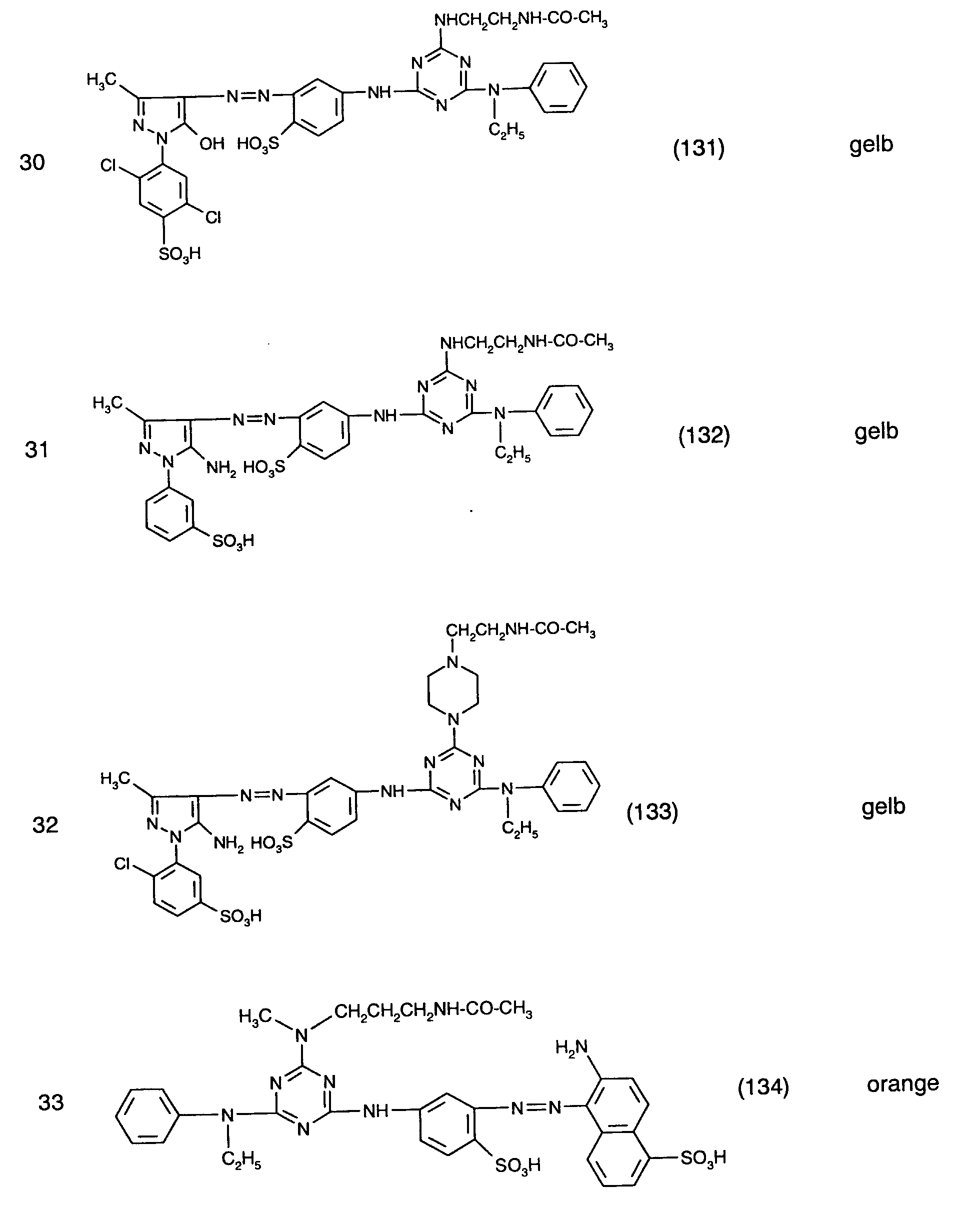

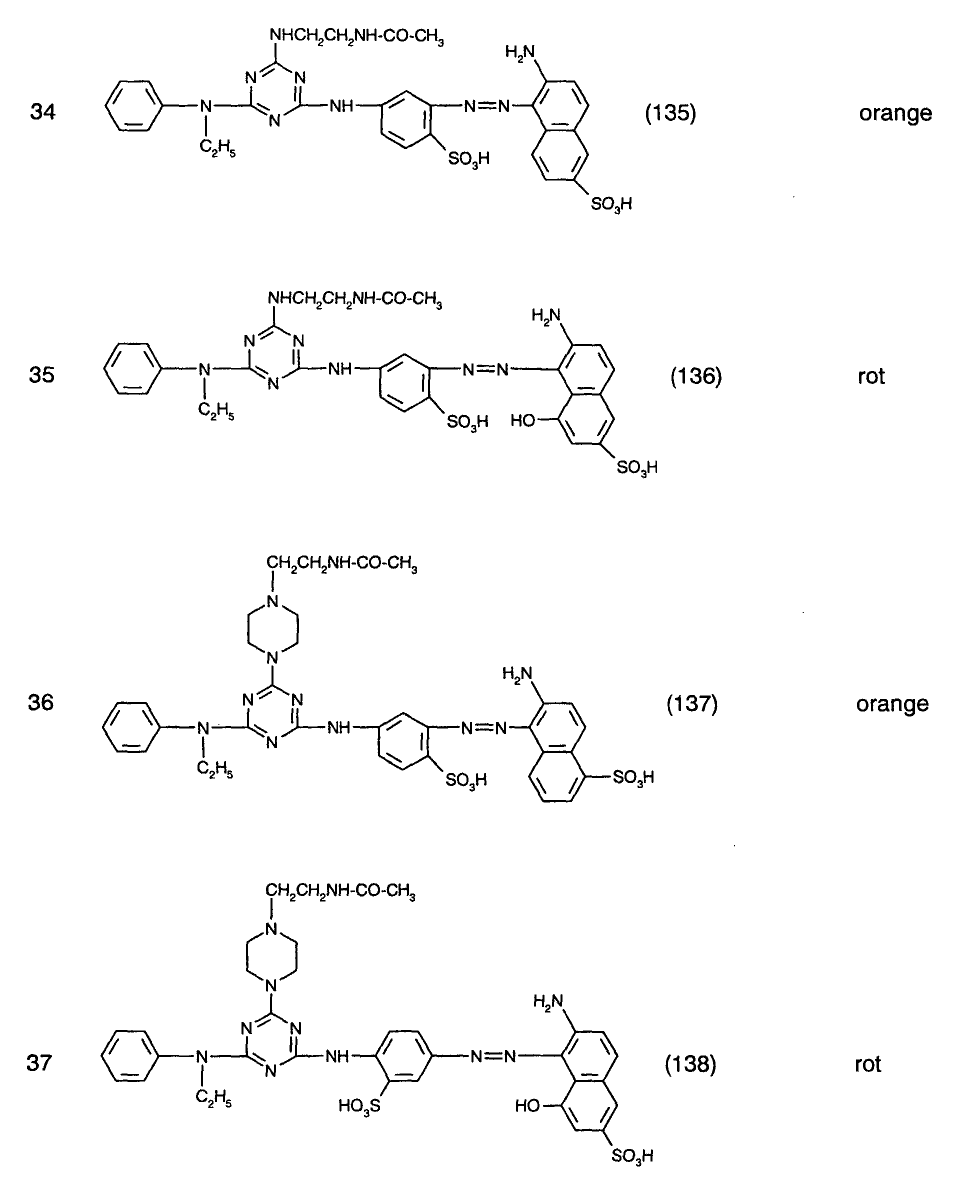

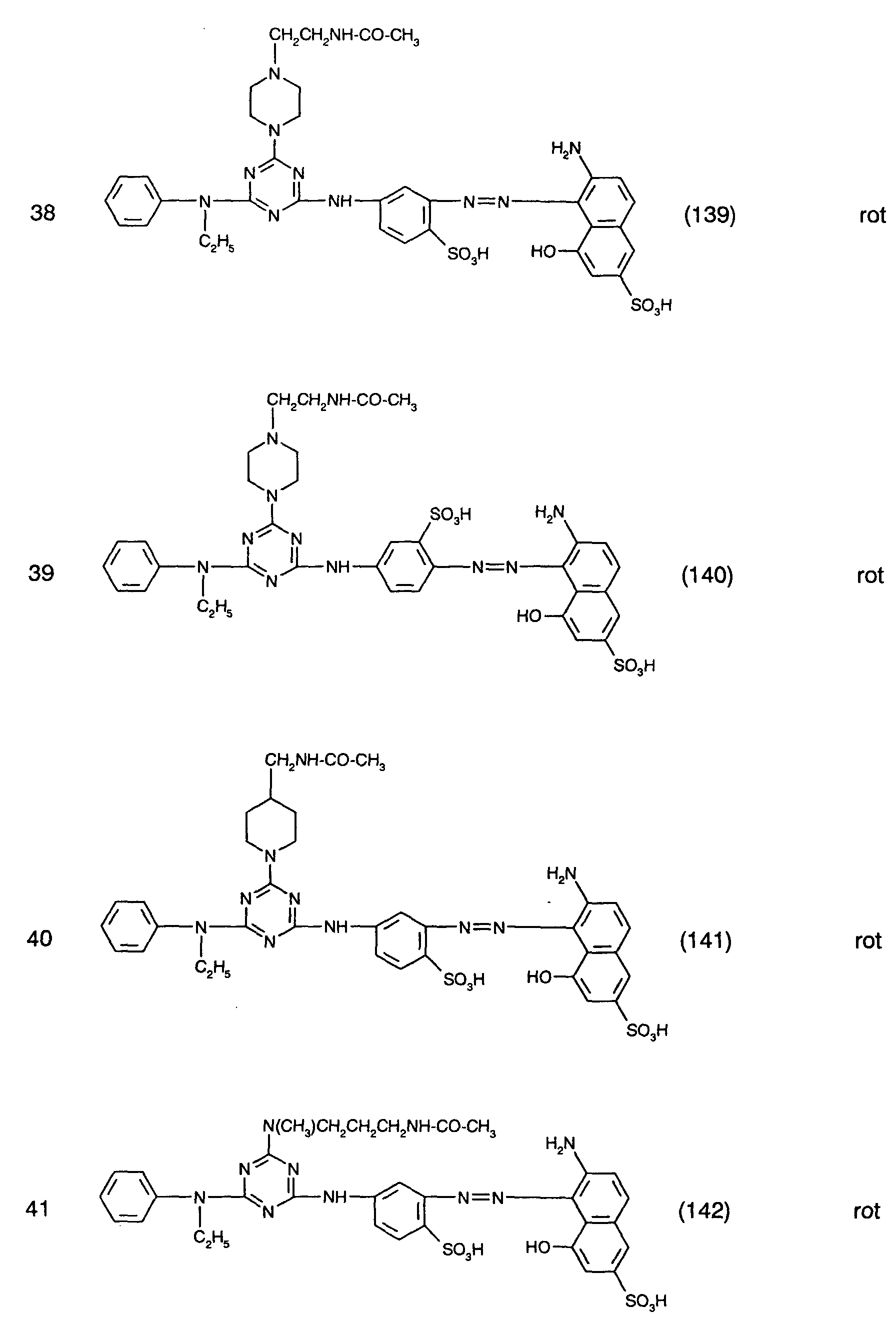

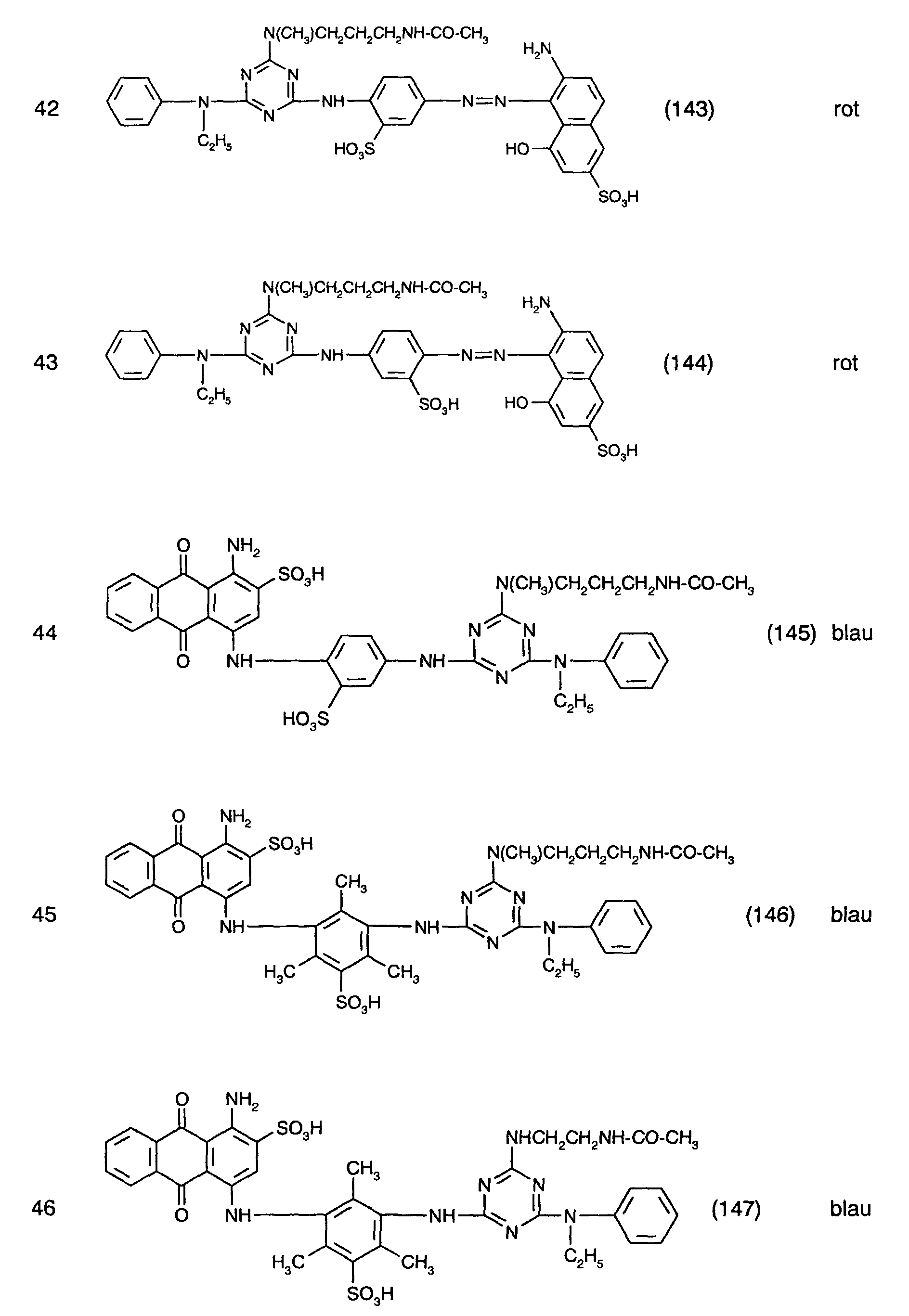

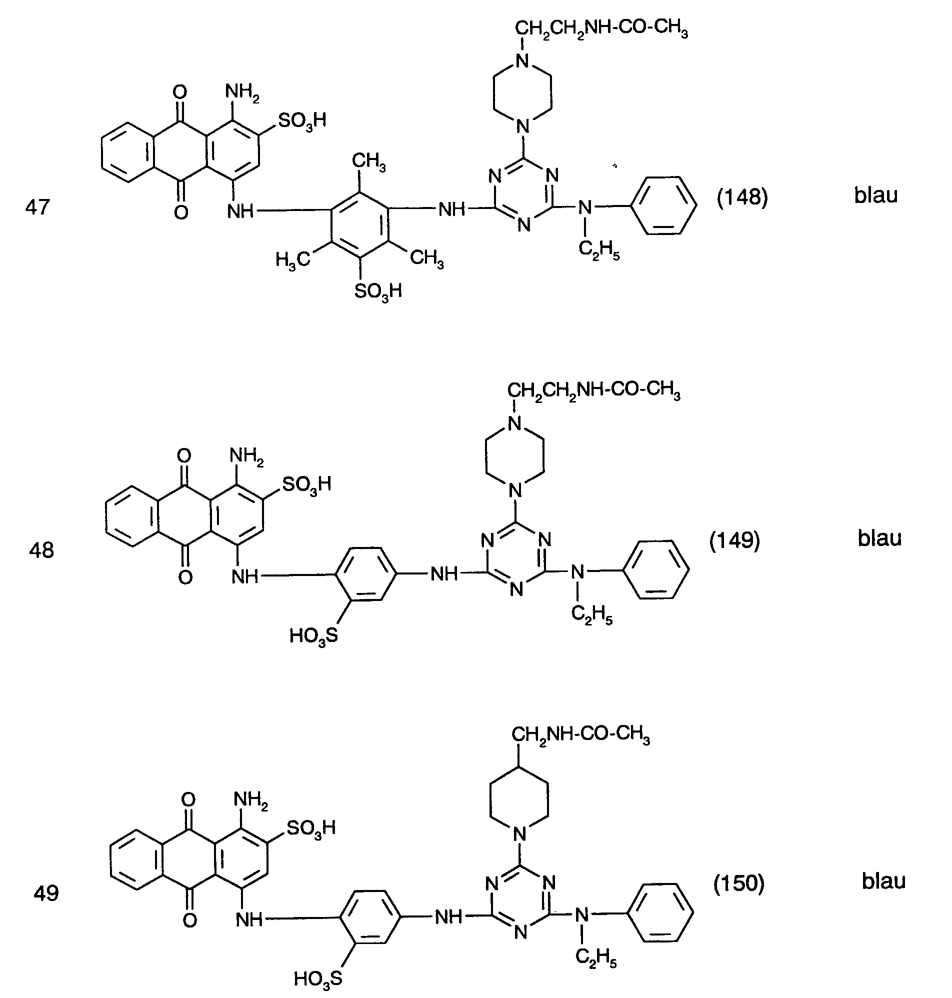

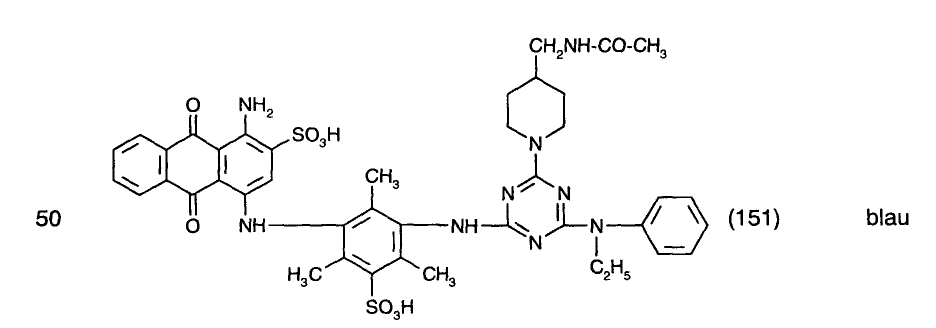

### Färbebeispiel 1:

100 Teile eines Wollgewebes werden in einem wässrigen Bad, welches 2000 Teile Wasser, 5 Teile Natriumsulfat, 2 Teile Natriumacetat und 2 Teile 80%-iger Essigsäure enthält, während 5 Minuten bei einer Temperatur von 30°C und einem pH-Wert von 4,5 vorbehandelt. Nach Zugabe einer wässrigen Lösung enthaltend 0,9 Teile des Farbstoffs der Formel (102) wird die Färbeflotte noch 5 Minuten bei einer Temperatur von 30°C gehalten und anschliessend mit einer Aufheizrate von 1,5°C pro Minute auf eine Temperatur von 100°C erhitzt. Man färbt 60 Minuten bei dieser Temperatur, kühlt dann auf 50°C ab und lässt die Färbeflotte ab. Das in einem orangen Farbton gefärbte Wollgewebe wird in üblicher Weise gespült und getrocknet.

### Färbebeispiel 2:

100 Teile eines Wollgewebes werden in einem wässrigen Bad, welches 2000 Teile Wasser, 5 Teile Natriumsulfat, 2 Teile Natriumacetat und 2 Teile 80%-iger Essigsäure enthält, während 5 Minuten bei einer Temperatur von 30°C und einem pH-Wert von 4,5 vorbehandelt. Nach Zugabe einer wässrigen Lösung enthaltend 0,9 Teile des Farbstoffs der Formel (102) und 2 Teile des Fixiermittels der Formel 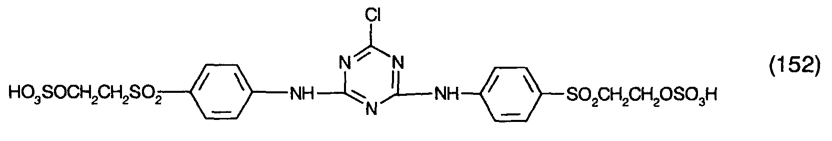 wird die Färbeflotte noch 5 Minuten bei einer Temperatur von 30°C gehalten und anschliessend mit einer Aufheizrate von 1,5°C pro Minute auf eine Temperatur von 100°C erhitzt. Man färbt 40 Minuten bei dieser Temperatur, setzt 15 Teile Dinatriumhydrogenphosphat zu und färbt noch 40 Minuten bei einem pH-Wert von 7 weiter. Man kühlt dann auf 50°C ab und lässt die Färbeflotte ab. Das in einem orangen Farbton gefärbte Wollgewebe wird gespült und getrocknet. Die erhaltene Färbung ist faseregal und weist sehr gute Nassechtheiten auf.

## Patentansprüche

1. Anionische Säurefarbstoffe der Formel 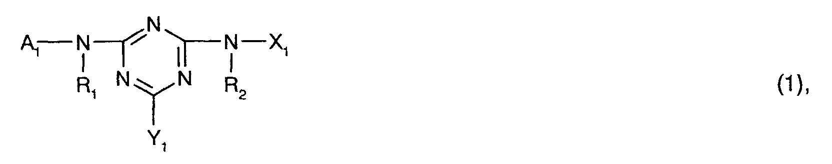 worin
R₁ Wasserstoff oder gegebenenfalls substituiertes C₁-C₄-Alkyl und
R₂ C₁-C₄-Alkyl ist,
X₁ C₁-C₈-Alkyl, gegebenenfalls substituiertes C₅-C₇-Cycloalkyl, gegebenenfalls durch C₁-C₄-Alkyl, C₁-C₄-Alkoxy, C₂-C₄-Alkanoylamino, Amino, Hydroxy, Ureido, Halogen, Carboxy oder Sulfo substituiertes Phenyl oder Naphthyl ist oder der Rest der Formel -N(R₂)-X₁ ein gegebenenfalls weitere Heteroatome enthaltender Ring ist,
Y₁ ein Rest der Formel 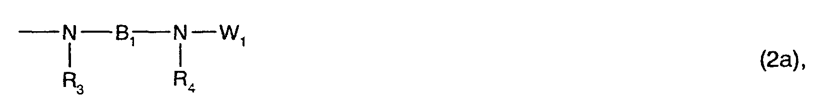 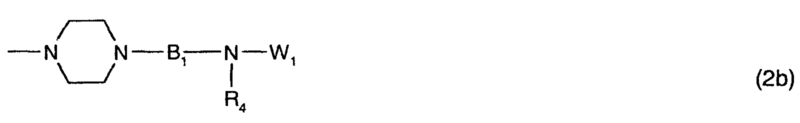 oder 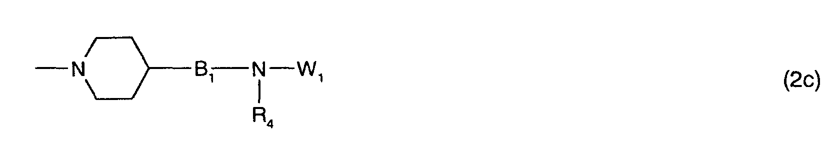 ist, worin
B₁ ein farbloses organisches Brückenglied,
R₃ Wasserstoff oder C₁-C₄-Alkyl und R₄ Wasserstoff oder gegebenenfalls substituiertes C₁-C₄-Alkyl sind,
W₁ Wasserstoff oder ein Rest der Formel -CO-R ist, wobei R gegebenenfalls substituiertes C₁-C₈-Alkyl, C₅-C₇-Cycloalkyl, Phenyl oder Naphthyl bedeutet, und
A₁ ein Rest der Formel 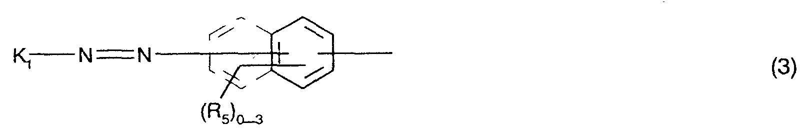 oder 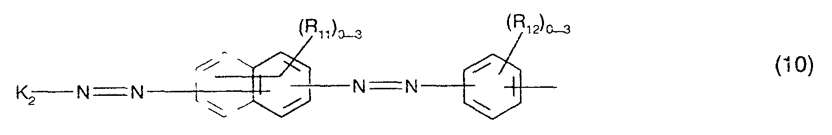 ist, worin
K₁ und K₂ unabhängig voneinander ein Rest der Benzol- oder Naphthalinreihe oder ein heterocyclischer Rest sind,
(R₅)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxy und Sulfo steht und
(R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen, oder
A₁ der Rest eines Metallkomplexazo-, Anthrachinon-, Formazan-, Phthalocyanin- oder Dioxazinfarbstoffes ist.

2. Anionische Säurefarbstoffe gemäss Anspruch 1, worin
R₁ Wasserstoff oder C₁-C₄-Alkyl ist.

3. Anionische Säurefarbstoffe gemäss einem der Ansprüche 1 und 2, worin
X₁ C₁-C₈-Alkyl, gegebenenfalls durch C₁-C₄-Alkyl substituiertes C₅-C₇-Cycloalkyl oder gegebenenfalls durch C₁-C₄-Alkyl, C₁-C₄-Alkoxy, C₂-C₄-Alkanoylamino, Ureido, Halogen, Carboxy oder Sulfo substituiertes Phenyl oder Naphthyl ist.

4. Anionische Säurefarbstoffe gemäss einem der Ansprüche 1 bis 3, worin
X₁ gegebenenfalls durch C₁-C₄-Alkyl; C₁-C₄-Alkoxy, C₂-C₄-Alkanoylamino, Ureido, Halogen, Carboxy oder Sulfo substituiertes Phenyl, insbesondere Phenyl, ist.

5. Anionische Säurefarbstoffe gemäss einem der Ansprüche 1 bis 4, worin
B₁ ein C₁-C₁₀-Alkylenrest ist, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist.

6. Anionische Säurefarbstoffe gemäss einem der Ansprüche 1 bis 5, worin
R₄ Wasserstoff oder C₁-C₄-Alkyl ist.

7. Anionische Säurefarbstoffe gemäss einem der Ansprüche 1 bis 6, worin
R C₁-C₈-Alkyl oder gegebenenfalls durch C₁-C₄-Alkyl, C₁-C₄-Alkoxy, Halogen, Carboxy oder Sulfo substituiertes Phenyl ist.

8. Anionische Säurefarbstoffe gemäss einem der Ansprüche 1 bis 7, worin
W₁ Wasserstoff ist.

9. Anionische Säurefarbstoffe gemäss einem der Ansprüche 1 bis 8, worin
R₁, R₃ und R₄ unabhängig voneinander Wasserstoff oder C₁-C₄-Alkyl sind,
X₁ gegebenenfalls durch C₁-C₄-Alkyl, C₁-C₄-Alkoxy, C₂-C₄-Alkanoylamino, Ureido, Halogen, Carboxy oder Sulfo substituiertes Phenyl ist,
B₁ ein C₁-C₁₀-Alkylenrest ist, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist, und
W₁ Wasserstoff ist.

10. Anionische Säurefarbstoffe gemäss einem der Ansprüche 1 bis 9, worin
A₁ ein Rest der Formel (3) oder (10) oder der Rest eines Anthrachinonfarbstoffes ist.

11. Anionische Säurefarbstoffe gemäss einem der Ansprüche 1 bis 10, worin
A₁ ein Rest der Formel (3) oder (10) oder ein Rest der Formel 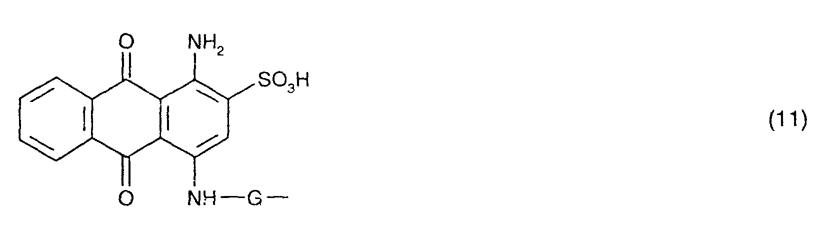 ist, worin G einen unsubstituierten oder durch C₁-C₄-Alkyl, C₁-C₄-Alkoxy, Halogen, Carboxy oder Sulfo substituierten Phenylenrest oder einen Cyclohexylen-, Phenylenmethylen- oder C₂-C₆-Alkylenrest bedeutet.

12. Anionische Säurefarbstoffe gemäss einem der Ansprüche 1 bis 11, worin
A₁ ein Rest der Formel 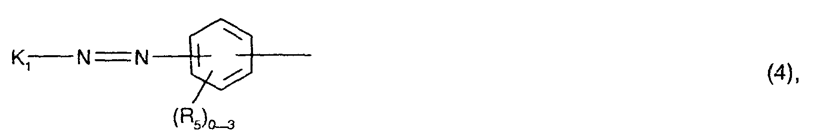 (10) oder 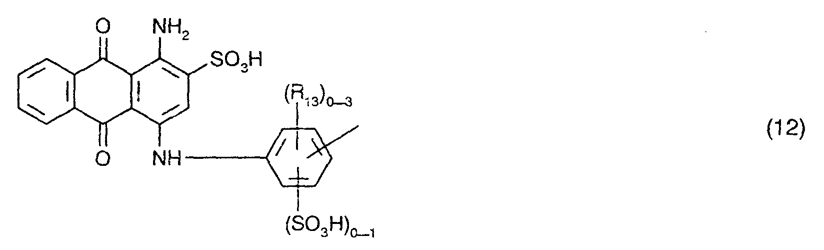 ist, worin
(R₅)₀₋₃ für 0 bis 3 gleiche oder voneinander verschiedene Substituenten ausgewählt aus der Gruppe C₁-C₄-Alkyl, C₁-C₄-Alkoxy, Halogen und Sulfo steht,
(R₁₃)₀₋₃ für 0 bis 3 gleiche oder voneinander verschiedene Substituenten ausgewählt aus der Gruppe C₁-C₄-Alkyl, C₁-C₄-Alkoxy, Halogen, Carboxy und Sulfo steht, und
K₁ im Rest der Formel (4) und K₂ im Rest der Formel (10) unabhängig voneinander ein Rest der Formel 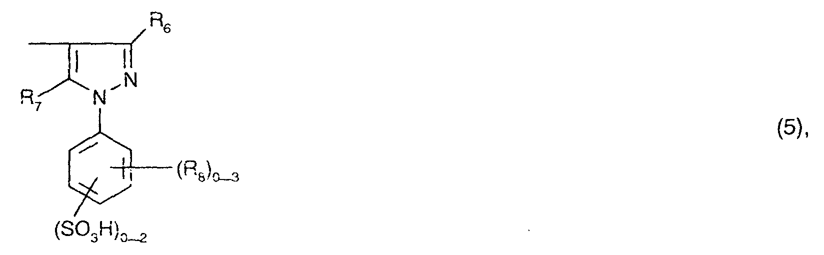 worin
R₆ Methyl oder Carboxyl,
R₇ Amino oder Hydroxyl ist und
(R₈)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxyl und Sulfo steht,
oder ein Rest der Formel 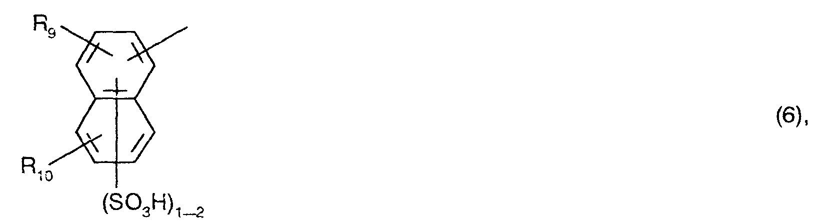 worin
R₉ Wasserstoff, Amino oder N-Mono- oder N,N-Di-C₁-C₄-Alkylamino und
R₁₀ Wasserstoff oder Hydroxyl ist, sind.

13. Verfahren zur Herstellung von anionischen Säurefarbstoffen gemäss Anspruch 1, dadurch gekennzeichnet, dass man Cyanurhalogenid mit einer Verbindung der Formel
A₁-NHR₁ (13),
einer Verbindung der Formel
X₁-NHR₂ (14)
und einer Verbindung der Formel
Y₁-H (15)
umsetzt und gegebenenfalls eine Umwandlungsreaktion anschliesst, wobei A₁, X₁, Y₁, R₁ und R₂ die in Anspruch 1 angegebenen Bedeutungen haben.

14. Verwendung der anionischen Säurefarbstoffe gemäss einem der Ansprüche 1 bis 12 bzw. der gemäss Anspruch 13 erhaltenen anionischen Säurefarbstoffe zum Färben oder Bedrucken von hydroxylgruppenhaltigen oder stickstoffhaltigen Fasermaterialien.

15. Verwendung gemäss Anspruch 14 zum Färben oder Bedrucken von natürlichem oder synthetischem Polyamidfasermaterial.

## Claims

1. An anionic acid dye of the formula 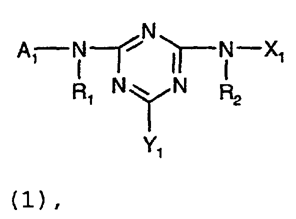 in which
R₁ is hydrogen or substituted or unsubstituted
C₁-C₄alkyl and
R₂ is C₁-C₄alkyl,
X₁ is C₁-C₈alkyl, substituted or unsubstituted C₅-C₇cycloalkyl, phenyl or naphthyl which are unsubstituted or substituted by C₁-C₄ alkyl, C₁-C₄ alkoxy, C₂-C₄alkanoyl- amino, amino, hydroxyl, ureido, halogen, carboxyl or sulfo,
or the radical of the formula -N(R₂)-X₁ is a ring, which may contain further heteroatoms,
Y₁ is a radical of the formula 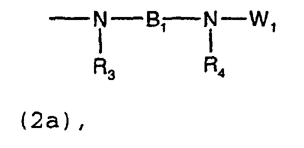 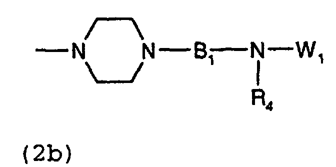 or 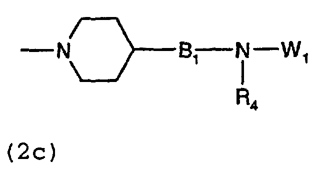 in which
B₁ is a colourless organic bridge member,
R₃ is hydrogen or C₁-C₄ alkyl and R₄ is hydrogen or substituted or unsubstituted C₁-C₄alkyl,
W₁ is hydrogen or a radical of the formula -CO-R, in which
R is substituted or unsubstituted C₁-C₈alkyl, C₅-C₇cycloalkyl, phenyl or naphthyl and
A₁ is a radical of the formula 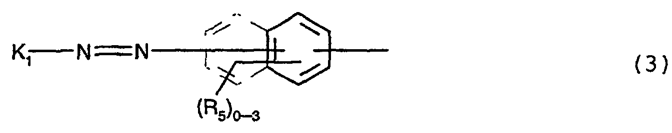 or 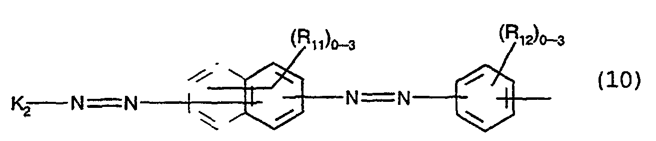 in which
K₁ and K₂ independently of one another are a radical of the benzene or naphthalene series or a heterocyclic radical,
(R₅)₀₋₃ is 0 to 3 identical or different substituents chosen from the group consisting of C₁-C₄alkyl, C₁-C₄alkoxy, C₂-C₄alkanoylamino, ureido, halogen, carboxyl and sulfo, and
(R₁₁)₀₋₃ and (R₁₂)₀₋₃ independently of one another are 0 to 3 identical or different substituents chosen from the group consisting of C₁-C₄alkyl, C₁-C₄alkoxy, C₂-C₄alkanoylamino, halogen, hydroxyl, cyano, carbamoyl, carboxyl, sulfo, amino and N-mono- or N,N-di-C₁-C₄alkylamino,
A₁ is the radical of a metal complex azo, anthraquinone, formazan, phthalocyanine or dioxazine dye.

2. An anionic acid dye according to claim 1, wherein
R₁ is hydrogen or C₁-C₄alkyl.

3. An anionic acid dye according to either claim 1 or claim 2, wherein
X₁ is C₁-C₈alkyl, C₅-C₇cycloalkyl which is unsubstituted or substituted by C₁-C₄alkyl, or phenyl or naphthyl which are unsubstituted or substituted by C₁-C₄alkyl, C₁-C₄alkoxy, C₂-C₄-alkanoylamino, ureido, halogen, carboxyl or sulfo.

4. An anionic acid dye according to any one of claims 1 to 3, wherein
X₁ is phenyl which is unsubstituted or substituted by C₁-C₄alkyl, C₁-C₄alkoxy, C₂-C₄-alkanoylamino, ureido, halogen, carboxyl or sulfo, in particular phenyl.

5. An anionic acid dye according to any one of claims 1 to 4, wherein
B₁ is a C₁-C₁₀alkylene radical which can be interrupted by 1, 2 or 3 members from the group consisting of -NH-, -N(CH₃)- and -O- and is unsubstituted or substituted by hydroxyl, sulfo, sulfato, cyano or carboxyl.

6. An anionic acid dye according to any one of claims 1 to 5, wherein
R₄ is hydrogen or C₁-C₄alkyl.

7. An anionic acid dye according to any one of claims 1 to 6, wherein
R is C₁-C₈alkyl, or phenyl which is unsubstituted or substituted by C₁-C₄alkyl, C₁-C₄alkoxy, halogen, carboxyl or sulfo.

8. An anionic acid dye according to any one of claims 1 to 7, wherein
W₁ is hydrogen.

9. An anionic acid dye according to any one of claims 1 to 8, wherein
R₁, R₃ and R₄ independently of one another are hydrogen or C₁-C₄alkyl,
X₁ is phenyl which is unsubstituted or substituted by C₁-C₄alkyl, C₁-C₄alkoxy, C₂-C₄alkanoylamino, ureido, halogen, carboxyl or sulfo,
B₁ is a C₁-C₁₀alkylene radical, which can be interrupted by 1, 2 or 3 members from the group consisting of -NH-, -N(CH₃)- and -O- and is unsubstituted or substituted by hydroxyl, sulfo, sulfato, cyano or carboxyl and
W₁ is hydrogen.

10. An anionic acid dye according to any one of claims 1 to 9, wherein
A₁ is a radical of the formula (3) or (10) or the radical of an anthraquinone dye.

11. An anionic acid dye according to any one of claims 1 to 10, wherein
A₁ is a radical of the formula (3) or (10) or a radical of the formula 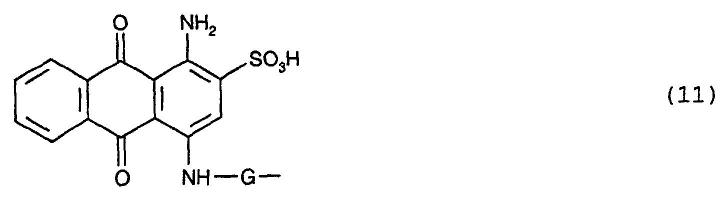 in which G is a phenylene radical which is unsubstituted or substituted by C₁-C₄alkyl, C₁-C₄alkoxy, halogen, carboxyl or sulfo, or a cyclohexylene, phenylenemethylene or C₂-C₆alkylene radical.

12. An anionic acid dye according to any one of claims 1 to 11, wherein
A₁ is a radical of the formula 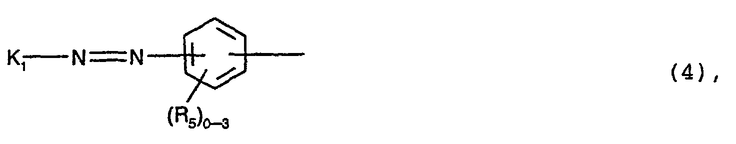 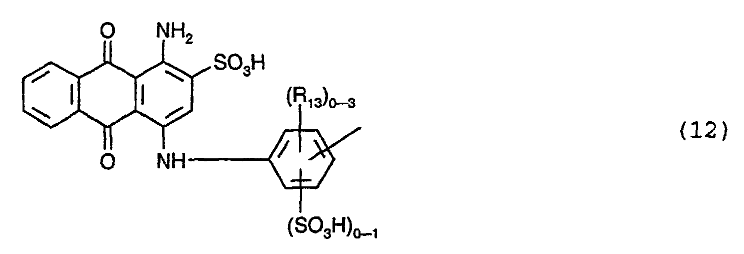 in which
(R₅)₀₋₃ is 0 to 3 identical or different substituents chosen from the group consisting of C₁-C₄alkyl, C₁-C₄alkoxy, halogen and sulfo,
(R₁₃)₀₋₃ is 0 to 3 identical or different substituents chosen from the group consisting of C₁-C₄alkyl, C₁-C₄alkoxy, halogen, carboxyl and sulfo, and
K₁ in the radical of the formula (4) and K₂ in the radical of the formula (10) independently of one another are a radical of the formula 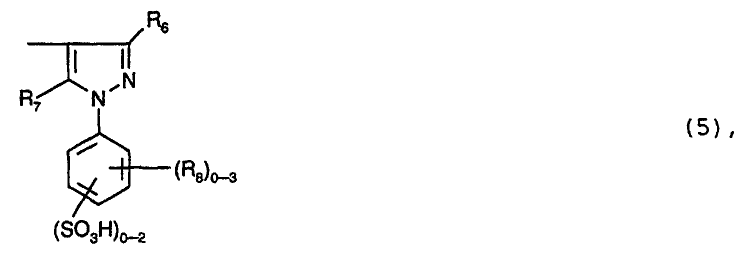 in which
R₆ is methyl or carboxyl,
R₇ is amino or hydroxyl and
(R₈)₀₋₃ is 0 to 3 identical or different substituents chosen from the group consisting of C₁-C₄alkyl, C₁-C₄alkoxy, C₂-C₄alkanoylamino, ureido, halogen, carboxyl and sulfo,
or a radical of the formula 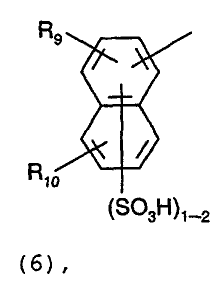 in which
R₉ is hydrogen, amino or N-mono- or N,N-di-C₁-C₄alkylamino and
R₁₀ is hydrogen or hydroxyl.

13. A process for the preparation of an anionic acid dye according to claim 1, which comprises reacting a cyanuric halide with a compound of the formula
A₁-NHR₁ (13),
a compound of the formula
X₁-NHR₂ (14)
and a compound of the formula
Y₁-H (15)
and if desired subsequently carrying out a conversion reaction, where A₁, X₁, Y₁, R₁ and R₂ are as defined in claim 1.

14. The use of an anionic acid dye according to any one of claims 1 to 12 or of an anionic acid dye obtained according to claim 13 for dyeing or printing fibre materials containing hydroxyl groups or containing nitrogen.

15. The use according to claim 14 for dyeing or printing natural or synthetic polyamide fibre materials.

## Revendications

1. Colorants anioniques de formule 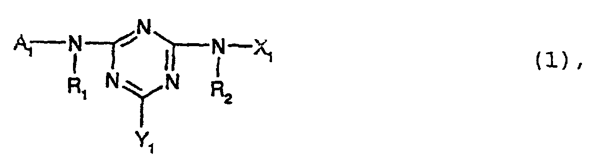 où
R₁ représente un atome d'hydrogène ou un groupe alkyle en C₁-C₄ éventullement substitué et
R₂ représente un groupe alkyle en C₁-C₄ ;
X₁ représente des groupes alkyle en C₁-C₈, cycloalkyle en C₅-C₇ éventuellement substitué, phényle ou naphtyle éventuellement substitué par des substituants alkyle en C₁-C₄, alkoxy en C₁-C₄, (alcanoyl en C₂-C₄)amino, amino, hydroxy, uréido, halogène, carboxy ou sulfo, ou le reste de formule -N(R₂)-X₁ représente un cycle contenant éventuellement d'autres hétéroatomes,
Y₁ représente un reste de formule 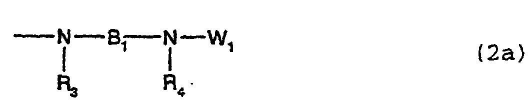 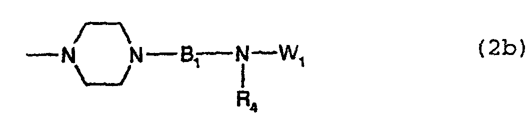 ou 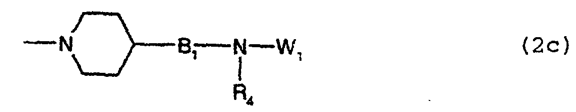 où
B₁ représente un élément de pontage incolore,
R₃ représente un atome d'hydrogène ou un groupe alkyle en C₁-C₄ et
R₄ représente un atome d'hydrogène ou un groupe alkyle en C₁-C₄ éventuellement substitué,
W₁ représente un atome d'hydrogène ou un reste de formule -CO-R, R représentant un reste phényle naphtyle, cycloalkyle en C₅-C₇ ou alkyle en C₁-C₈ éventuellement substitué et
A₁ représente un reste de formule 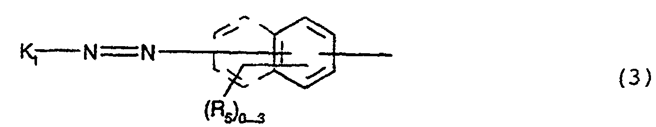 ou 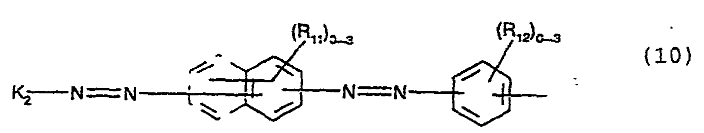 où
K₁ et K₂ représentent, indépendamment l'un de l'autre un reste de la série du benzène ou du naphtalène ou un reste hétérocyclique ;
(R₅)₀₋₃ représente 0 à 3 substituants indentiques ou différents pris dans le groupe comportant des substituants alkyle en C₁-C₄, alkoxy en C₁-C₄, (alcanoyl en C₁-C₄)amino, uréido, halogène, carboxy et sulfo et
(R₁₁)₀₋₃ et (R₁₂)₀₋₃ représentent, indépendamment l'un de l'autre, 0 à 3 substituants identiques ou différents pris dans le groupe comportant des substituants alkyle en C₁-C₄, alkoxy en C₁-C₄, (alcanoyl en C₁-C₄)amino, halogène, hydroxyle, cyano, carbamoyle, carboxyle, sulfo, amino et N-mono- ou N,N-di-(alkyl en C₁-C₄)amino, ou
A₁ représente le reste d'un colorant azoïque à complexe métallifère, d'un colorant anthraquinonique, de formazane, de phtalocyanine ou de dioxazine.

2. Colorants acides anioniques selon la revendication 1, où
R₁ représente un atome d'hydrogène ou un groupe alkyle en C₁-C₄.

3. Colorants acides anioniques selon l'une des revendications 1 ou 2, où
X₁ représente des groupes alkyle en C₁-C₈, cycloalkyle en C₅-C₇ éventuellement substitué par un substituant alkyle en C₁-C₄ ou des groupes phényle ou naphtyle éventuellement substitués par des substituants alkyle en C₁-C₄, alkoxy en C₁-C₄, (alcanoyl en C₂-C₄)amino, uréido, halogène, carboxy ou sulfo.

4. Colorants acides anioniques selon l'une des revendications 1 ou 3, où
X₁ représente un groupe phényle éventuellement substitué par des substituants alkyle en C₁-C₄, alkoxy en C₁-C₄, (alcanoyl en C₂-C₄)amino, uréido, halogène, carboxy ou sulfo, en particulier un groupe phényle.

5. Colorants acides anioniques selon l'une des revendications 1 ou 4, où
B₁ représente un reste alkylène en C₁-C₁₀, qui peut être interrompu par 1, 2 ou 3 membres pris parmi les groupes -NH-, -N(CH₃)- ou -O- et peut être non substitué ou substitué par des substituants hydroxy, sulfo, sulfato, cyano ou carboxy.

6. Colorants acides anioniques selon l'une des revendications 1 ou 5, où
R₄ représente un atome d'hydrogène ou un groupe alkyle en C₁-C₄.

7. Colorants acides anioniques selon l'une des revendications 1 ou 6, où
R représente un groupe alkyle en C₁-C₈ ou phényle éventuellement substitué par des substituants alkyle en C₁-C₄, alkoxy en C₁-C₄, halogène, carboxy ou sulfo.

8. Colorants acides anioniques selon l'une des revendications 1 ou 7, où
W₁ représente un atome d'hydrogène.

9. Colorants acides anioniques selon l'une des revendications 1 ou 8, où
R₁, R₃ et R₄ représentent, indépendamment l'un de l'autre, des atomes d'hydrogène ou des groupes alkyle en C₁-C₄,
X₁ représente un groupe phényle éventuellement substitué par des substituants alkyle en C₁-C₄, alkoxy en C₁-C₄, (alcanoyl en C₂-C₄)amino, uréido, halogène, carboxy ou sulfo,
B₁ représente un reste alkylène en C₁-C₁₀, qui peut être interrompu par 1, 2 ou 3 membres pris parmi les groupes -NH-, -N(CH₃)- ou -O- et peut être non substitué ou substitué par des substituants hydroxy, sulfo, sulfato, cyano ou carboxy, et
W₁ représente un atome d'hydrogène.

10. Colorants acides anioniques selon l'une des revendications 1 ou 9, où
A₁ représente un reste de formule (3) ou (10) ou le reste d'un colorant anthraquinonique.

11. Colorants acides anioniques selon l'une des revendications 1 ou 10, où
A₁ représente un reste de formule (3) ou (10) ou un reste de formule 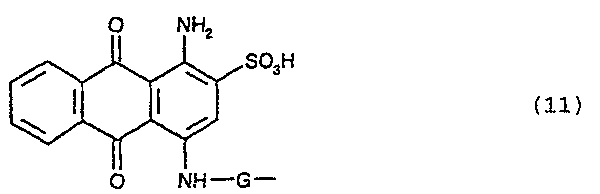
où G représente un reste phénylène non substitué ou substitué par des substituants alkyle en C₁-C₄, alkoxy en C₁-C₄, halogène, carboxy ou sulfo, ou un reste cyclohexylène, phénylène-méthylène ou alkylène en C₂-C₆.

12. Colorants acides anioniques selon l'une des revendications 1 ou 11, où
A₁ représente un reste de formule 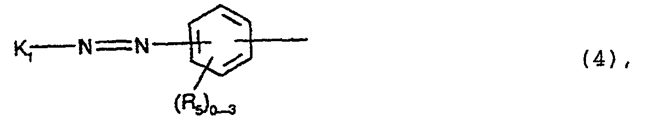 (10) ou 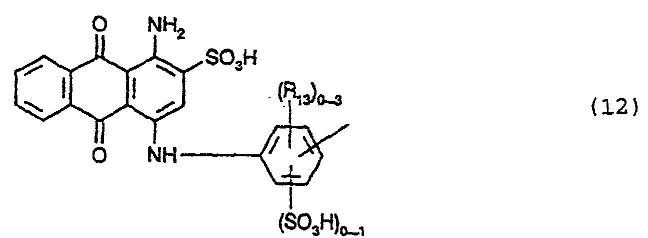 où
(R₅)₀₋₃ représente 0 à 3 substituants indentiques ou différents pris dans le groupe comportant des substituants alkyle en C₁-C₄, alkoxy en C₁-C₄, halogène et sulfo,
(R₁₃)₀₋₃ représente 0 à 3 substituants indentiques ou différents pris dans le groupe comportant des substituants alkyle en C₁-C₄, alkoxy en C₁-C₄, halogène, carboxy et sulfo, et
K₁ dans le reste de formule (4) et K₂ dans le reste de formule (10) représentent, indépendamment l'un de l'autre, un reste de formule 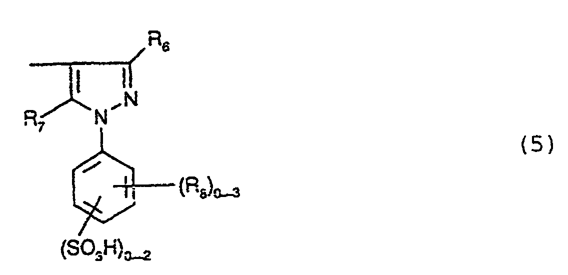 où
R₆ représente des groupes méthyle ou carboxyle,
R₇ représente des groupes amino ou hydroxyle et
(R₈)₀₋₃ représente 0 à 3 substituants indentiques ou différents pris dans le groupe comportant des substituants alkyle en C₁-C₄, alkoxy en C₁-C₄, (alcanoyl en C₂-C₄)amino, uréido, halogène, carboxy et sulfo,
ou un reste de formule 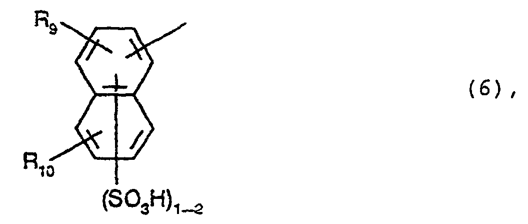 où
R₉ représente un atome d'hydrogène, des groupes amino, N-mono- ou N,N-di-(alkyl en C₁-C₄)amino et
R₁₀ représente un atome d'hydrogène ou un groupe hydroxyle.

13. Procédé pour la préparation de colorants acides anioniques selon la revendication 1, caractérisé en ce qu'on fait réagir un halogénure de cyanuryle sur un composé de formule
A₁-NHR₁ (13),
un composé de formule
X₁-NHR₂ (14)
et un composé de formule
Y₁-H (15)
et en faisant éventuellement suivre d'une réaction de transformation, A₁, X₁, Y₁, R₁ et R₂ ayant les significations données à la revendication 1.

14. Utilisation des colorants acides anioniques selon l'une des revendications 1 à 12 ou bien des colorants acides anioniques obtenus selon la revendication 13 pour la teinture ou l'impression de matières fibreuses contenant des groupes hydroxyle ou azotés.

15. Utilisation selon la revendication 14 pour la teinture ou l'impression de matière fibreuse polyamide naturelle ou synthétique.
